(19) **Europäisches Patentamt**

**European Patent Office**

**Office européen des brevets**

(11) **EP 1 632 857 A1**

(12) **EUROPEAN PATENT APPLICATION**
published in accordance with Art. 158(3) EPC

(43) Date of publication:
08.03.2006 Bulletin 2006/10

(51) Int Cl.:
*G06F 12/00* (1985.01)      *G06F 13/00* (1968.09)
*G06F 17/30* (1995.01)

(21) Application number: 03736132.6

(22) Date of filing: 10.06.2003

(86) International application number:
PCT/JP2003/007365

(87) International publication number:
WO 2004/111853 (23.12.2004 Gazette 2004/52)

(84) Designated Contracting States:
DE FR GB

(71) Applicant: FUJITSU LIMITED
Kawasaki-shi,
Kanagawa 211-8588 (JP)

(72) Inventors:
• TAKIYAMA, Shushi
Inagi-shi,
Tokyo 206-0801 (JP)
• TANAKA, Takehiko
Inagi-shi,
Tokyo 206-0801 (JP)

• UEDA, Sunao
Inagi-shi,
Tokyo 206-0801 (JP)
• MIZUNO, Joe
Inagi-shi,
Tokyo 206-0801 (JP)

(74) Representative: Sunderland, James Harry
Haseltine Lake,
Imperial House,
15-19 Kingsway
London WC2B 6UD (GB)

(54) **IMAGE MANAGEMENT METHOD**

(57)    An image server includes a totaling section for totaling user attributes for user of the image and outputting the totaled result, a recording section for recording image file for each image, the user attributes of each user of the image, and the totaled result, a judgment section for judging whether the totaled result satisfies a predetermined reference, and a processor for processing at least one of the image file and the user attribute according to the result of the judgment.

*FIG. 20*

EP 1 632 857 A1

**Description**

TECHNICAL FIELD

The present invention relates to an image management method, an image server, a terminal, an image display terminal, an image management program, and a computer-readable recording medium recording the image management program, which are used to perform management of an image file such as a still image file or a moving image file.

BACKGROUND ART

Conventionally, a terminal that displays an image has been known. For instance, this terminal downloads an image file from an image server connected through a network and displays an image on itself.

Also, in the case where image displaying is performed through the Web, when a user that manipulates such a terminal does not wish to display a held image, he/she generally erases a corresponding image file altogether.

However, in the case of the conventional technique described above, there occur the following problems.

When image file sharing is performed between a terminal and an image server, there occurs a situation in which even when an image file has been erased on a terminal side, the erased image file is downloaded again from the image server into the terminal at the time of the next synchronization.

Also, at the time of new image file transmission from a terminal that performs image input to an image server, when an image file that needs to be transmitted and an image file that does not need to be transmitted coexist, it has been impossible to transmit only the necessary image file without erasing or moving the unnecessary image file.

Further, when there is a necessity to erase an image file at an image server, automatic erasing is not necessarily performed in a manner reflecting the will of the user of a terminal.

That is, the image server does not have information for judging which image file is necessary and which image file is unnecessary, so when image files are automatically erased based on information on a server side such as the creation times of the image files, there may occur a situation where an image file that the user wishes to view is erased and an image file that the user does not wish to view is left for a long time. Such automatic erasing does not necessarily reflect the wish of the user.

Therefore, with the conventional technique, it has been impossible to automatically manage a shared image file in accordance with the desire of every user.

The present invention has been made in order to solve the problems of the conventional technique described above and has an object to provide an image management method, an image server, a terminal, an image display terminal, an image management program, and a computer-readable recording medium recording the image management program, with which it is possible to manage an image file in accordance with the desire of a user.

Patent Document 1
JP2002-82964 A
Patent Document 2
JP2001-265631 A
Patent Document 3
JP2002-218262 A
Patent Document 4
JP2001-268328 A
Patent Document 5
JP10-150460 A

DISCLOSURE OF THE INVENTION

An image management method according to the present invention, which is executed by an image server that records an image file, includes: a totaling step of totaling user attributes for each user of an image of the image file and outputting a totaled result; a judgment step of judging whether the totaled result satisfies a predetermined reference; and a processing step of processing at least one of the image file and the user attributes according to a result of the judgment in the judgment step.

Further, in the image management method according to the present invention, the processing in the processing step is processing of the image file.

Further, in the image management method according to the present invention, the processing in the processing step is changing of the user attributes.

Further, an image management method according to the present invention, which is executed by an image server that records an image file, includes: a totaling step of totaling user attributes for each user of an image of the image file and outputting a totaled result; a judgment step of judging whether attribute information containing image management information generated for the image, the user attributes, and the totaled result satisfies a predetermined reference; and a transmission step of transmitting the image file to an image display terminal, which displays the image, according to a result of the judgment in the judgment step.

Further, an image management method according to the present invention, which is executed by a terminal that transmits an image file to an image server that records the image file, includes: an attribute information input step of inputting one of display attribute information and non-display attribute information for each image file to be transmitted; a judgment step of judging whether the image file is to be transmitted to the image server based on the inputted attribute information; and a transmission step of transmitting the image file to the image server according to a result of the judgment in the judgment step.

Further, an image management method according to the present invention, which is executed by an image display terminal that displays an image, includes: an attribute information input step of inputting one of display attribute information and non-display attribute information for an image in advance; a judgment step of judging whether an image file of the image is an image file of an image for which the display attribute information has been set, or an image file of an image for which the non-display attribute information has been set; and a processing step of processing the image according to a result of the judgment in the judgment step.

Further, an image management method according to the present invention, which is executed by an image server that records an image file, includes: a totaling step of totaling user attributes for each user of an image of the image file and outputting a totaled result; a judgment step of judging whether attribute information containing image management information generated for the image, the user attributes, and the totaled result satisfies a predetermined reference; and a transmission step of transmitting at least a part of the attribute information to an image display terminal, which displays the image, according to a result of the judgment in the judgment step.

An image server according to the present invention includes: totaling means for totaling user attributes for each user of an image of the image file and outputting a totaled result; judgment means for judging whether the totaled result satisfies a predetermined reference; and processing means for processing at least one of the image file and the user attributes according to a result of the judgment by the judgment means.

In the image server according to the present invention, the processing by the processing means is processing of the image file.

In the image server according to the present invention, the processing by the processingmeans is changing of the user attributes.

Further, an image server according to the present invention includes: totaling means for totaling user attributes for each user of an image and outputting a totaled result; judgment means for judging whether attribute information containing image management information generated for the image, the user attributes, and the totaled result satisfies a predetermined reference; and transmission means for transmitting the image file to an image display terminal, which displays the image, according to a result of the judgment by the judgment means.

Further, a terminal according to the present invention includes: attribute information input means for inputting one of display attribute information and non-display attribute information for each image file to be transmitted to an image server that records an image file; judgment means for judging whether the image file is to be transmitted to the image server based on the inputted attribute information; and transmission means for transmitting the image file to the image server according to a result of the judgment by the judgment means.

Further, an image display terminal according to the present invention includes: attribute information input means for inputting one of display attribute information and non-display attribute information for an image in advance; judgment means for judging whether an image file of the image is an image file of an image for which the display attribute information has been set, or an image file of an image for which the non-display attribute information has been set; and processing means for processing the image according to a result of the judgment by the judgment means.

Further, an image server according to the present invention includes: totaling means for totaling user attributes for each user of an image and outputting a totaled result; judgment means for judging whether attribute information containing image management information generated for the image, the user attributes, and the totaled result satisfies apredeterminedreference; and transmission means for transmitting at least a part of the attribute information to an image display terminal, which displays the image, according to a result of the judgment by the judgment means.

Further, an image management program according to the present invention causes a computer to function as: totaling means for totaling user attributes for each user of an image and outputting a totaled result; judgment means for judging whether the totaled result satisfies a predetermined reference; and processing means for processing at least one of the image file and the user attributes according to a result of the judgment by the judgment means.

Further, in the image management program according to the present invention, the processing by the processing means is processing of the image file.

Further, in the image management program according to the present invention, the processing by the processing means is changing of the user attributes.

Further, an image management program according to the present invention causes a computer to function as: totaling means for totaling user attributes for each user of an image and outputting a totaled result; judgment means for judging whether attribute information containing image management information generated for the image, the user attributes, and the totaled result satisfies a predetermined reference; and transmission means for transmitting the image file to an image display terminal, which displays the image, according to a result of the judgment by the judgment means.

Further, an image management program according to the present invention causes a computer to function as: attribute information input means for inputting one of display attribute information and non-display attribute information for each image file to be transmitted to an image server that records an image file; judgment means for judging whether the image file is to be transmitted to the image server based on the inputted attribute information; and transmission means for transmitting the image file to the image server according to a result of the judgment by the judgment means.

Further, an image management program according to the present invention causes a computer to function as: attribute information input means for inputting one of display attribute information and non-display attribute information for an image in advance; judgment means for judging whether an image file, which is transmitted from an image server that records an image file of the image, is an image file of an image for which the display attribute information has been set, or an image file of an image for which the non-display attribute information has been set; and processing means for processing the image according to a result of the judgment by the judgment means.

Further, an image management program according to the present invention causes a computer to function as: totaling means for totaling user attributes for each user of an image and outputting a totaled result; judgment means for judging whether attribute information containing image management information generated for the image, the user attributes, and the totaled result satisfies a predetermined reference; and transmission means for transmitting at least a part of the attribute information to an image display terminal, which displays the image, according to a result of the judgment by the judgment means.

Further, a computer-readable recording medium recording an image management program according to the present invention records an image management program for causing a computer to function as: totaling means for totaling user attributes for each user of an image and outputting a totaled result; judgment means for judging whether the totaled result satisfies a predetermined reference; and processing means for processing at least one of the image file of the image and the user attributes according to a result of the judgment by the judgment means.

Further, in the computer-readable recording medium recording an image management program according to the present invention, the processing by the processing means is processing of the image file.

Further, in the computer-readable recording medium recording an image management program according to the present invention, the processing by the processing means is changing of the user attributes.

Further, a computer-readable recording medium recording an image management program according to the present invention records an image management program for causing a computer to function as: totaling means for totaling user attributes for each user of an image and outputting a totaled result; judgment means for judging whether attribute information containing image management information generated for the image, the user attributes, and the totaledresult satisfies apredeterminedreference; and transmission means for transmitting the image file to an image display terminal, which displays the image, according to a result of the judgment by the judgment means.

Further, a computer-readable recording medium recording an image management program according to the present invention records an image management program for causing a computer to function as: attribute information input means for inputting one of display attribute information and non-display attribute information for each image file to be transmitted to an image server that records an image file; judgment means for judging whether the image file is to be transmitted to the image server, which records the image file, based on the inputted attribute information; and transmission means for transmitting the image file to the image server according to a result of the judgment by the judgment means.

Further, a computer-readable recording medium recording an image management program according to the present invention records an image management program for causing a computer to function as: attribute information input means for inputting one of display attribute information and non-display attribute information for an image in advance; judgment means for judging whether an image file of the image transmitted from an image server that records the image file is an image file of an image for which the display attribute information has been set, or an image file of an image for which the non-display attribute information has been set; and processing means for processing the image according to a result of the judgment by the judgment means.

Further, a computer-readable recording medium recording an image management program according to the present invention records an image management program for causing a computer to function as: totaling means for totaling user attributes for each user of an image and outputting a totaled result; judgment means for judging whether attribute information containing image management information generated for the image, the user attributes, and the totaled result satisfies apredeterminedreference; and transmission means for transmitting at least a part of the attribute information to an image display terminal, which displays the image, according to a result of the judgment by the judgment means.

It should be noted here that the terminal described above means an image display terminal or an image input terminal, for instance.

Also, examples of the image file include a still image file, a moving image file, and a combination thereof.

BRIEF DESCRIPTION OF THE DRAWINGS

FIG. 1 is an overall schematic diagram of a system to which a first embodiment of an image management method according to the present invention is applied;

FIG. 2 is a hardware construction diagram of an image server 104 shown in FIG. 1;

FIG. 3 is a conceptual diagram of shared information recorded in the image server 104 shown in FIG. 1;

FIG. 4 is a table of the shared information recorded in the image server 104 shown in FIG. 1;

FIG. 5 is a flowchart of an operation in the case where an image file or attribute information is processed in response to a request from an image display terminal in the first embodiment of the image management method according to the present invention;

FIG. 6 is a flowchart of an operation in the case where an image file or attribute information is processed in response to a request from the image server in the first embodiment of the image management method according to the present invention;

FIG. 7 is a conceptual diagram in the case where the image display terminal and the image server perform image file sharing synchronization processing in the first embodiment of the image management method according to the present invention;

FIG. 8 is a flowchart of an operation in the case where the image display terminal and the image server perform the image file sharing synchronization processing in the first embodiment of the image management method according to the present invention;

FIG. 9 is a schematic system diagram for explaining an operation in the case where attribute information set at the image display terminal is recorded in the image display terminal in the first embodiment of the image management method according to the present invention;

FIG. 10 is a block diagram of the image display terminal used in the case where the attribute information set at the image display terminal is recorded in the image display terminal in the first embodiment of the image management method according to the present invention;

FIG. 11 is a flowchart of an operation in the case where the attribute information set at the image display terminal is recorded in the image display terminal in the first embodiment of the image management method according to the present invention;

FIG. 12 is a flowchart of an operation at the time when the image server calculates a totaled result of user attributes in the first embodiment of the image management method according to the present invention;

FIG. 13 is a flowchart of an operation at the time when the image server calculates the totaled result of the user attributes in the first embodiment of the image management method according to the present invention;

FIG. 14 is a block diagram of the image display terminal used in the case where the image server receives user attributes inputted into the image display terminal and calculates a totaled result for each image in the first embodiment of the image management method according to the present invention;

FIG. 15 is a block diagram of the image server used in the case where the image server receives the user attributes inputted into the image display terminal and calculates a totaled result for each image in the first embodiment of the image management method according to the present invention;

FIG. 16 is a flowchart of an operation in the case where the image server receives the user attributes inputted into the image display terminal and calculates a totaled result for each image in the first embodiment of the image management method according to the present invention;

FIG. 17 is a schematic system diagram for explaining an operation in the case where the image server receives the user attributes inputted into the image display terminal and calculates a totaled result for each image in the first embodiment of the image management method according to the present invention;

FIG. 18 is a schematic system diagram for explaining an operation in the case where the image server receives the user attributes inputted into the image display terminal and calculates a totaled result for each image in the first embodiment of the image management method according to the present invention;

FIG. 19 is a block diagram showing the internal functions of the image server used in the case where an operation in a step (S507, S603) shown in FIGS. 5 and 6 in which processing by the image server is executed is performed in the first embodiment of the image management method according to the present invention;

FIG. 20 is a flowchart of the operation in the step (S507, S603) shown in FIGS. 5 and 6 in which the processing at the image server is executed in the first embodiment of the image management method according to the present invention;

FIG. 21 is a schematic system diagram used to explain an operation in the case where the image file of each image satisfying a reference is transmitted from an image server to an image display terminal in a second embodiment of the image management method according to the present invention;

FIG. 22 is a block diagram of the image display terminal used in the case where the image file of the image satisfying the reference is transmitted from the image server to the image display terminal in the second embodiment of the image management method according to the present invention;

FIG. 23 is a block diagram of the image server used in the case where the image file of the image satisfying the reference is transmitted from the image server to the image display terminal in the second embodiment of the image management method according to the present invention;

FIG. 24 is a flowchart of the operation in the case where the image file of the image satisfying the reference is transmitted from the image server to the image display terminal in the second embodiment of the image management method according to the present invention;

FIG.25 is a schematic system diagram used to explain an operation in the case where only each image file, for which display attribute information is set, is transmitted from an image input terminal to an image server in a third embodiment of the image management method according to the present invention;

FIG. 26 is a block diagram of the image input terminal used in the case where only the image file, for which the display attribute information is set, is transmitted from the image input terminal to the image server in the third embodiment of the image management method according to the present invention;

FIG. 27 is a flowchart of the operation in the case where only the image file, for which the display attribute information is set, is transmitted from the image input terminal to the image server in the third embodiment of the image management method according to the present invention;

FIG. 28 is a schematic system diagram used to explain an operation in the case where even when an image, for which non-displaying attribute information is set, has been downloaded from an image server, it will not be displayed at an image display terminal in a fourth embodiment of the image management method according to the present invention;

FIG. 29 is a block diagram of the image display terminal used to explain the operation in the case where even when the image, for which the non-display attribute information is set, has been downloaded from the image server, it will not be displayed at the image display terminal in the fourth embodiment of the image management method according to the present invention;

FIG. 30 is a flowchart of the operation in the case where even when the image file of the image, for which the non-displaying attribute information is set in advance, has been downloaded from the image server, the image will not be displayed at the image display terminal in the fourth embodiment of the image management method according to the present invention;

FIG. 31 is a schematic system diagram used to explain an operation in the case where attribute information of an image, whose attribute information satisfies a reference, is transmitted from an image server to an image display terminal in a fifth embodiment of the image management method according to the present invention;

FIG. 32 is a block diagram of the image display terminal used in the case where the attribute information of the image, whose attribute information satisfies the reference, is transmitted from the image server to the image display terminal in the fifth embodiment of the image management method according to the present invention;

FIG. 33 is a block diagram of the image server used in the case where the attribute information of the image, whose attribute information satisfies the reference, is transmitted from the image server to the image display terminal in the fifth embodiment of the image management method according to the present invention; and

FIG. 34 is a flowchart of the operation in the case where the attribute information of the image, whose attribute information satisfies the reference, is transmitted from the image server to the image display terminal in the fifth embodiment of the image management method according to the present invention.

BEST MODE FOR CARRYING OUT THE INVENTION

Hereinafter, preferred embodiments of the present invention will be described in detail as examples with reference to the accompanying drawings. Here, there is no intention to limit the scope of the present invention to the sizes, materials, shapes, relative arrangements, and the like of components described in the embodiments unless specifically described otherwise.

Also, in the accompanying drawings, each same member is given the same reference numeral.

Further, the following description of each embodiment of an image management method according to the present invention doubles as the description of each embodiment of an image server, a terminal, an image display terminal, an image management program, and a computer-readable recording medium recording the image management program according to the present invention.

(First Embodiment of Image Management Method)

First, a first embodiment of the image management method according to the present invention will be described with reference to the accompanying drawings.

The first embodiment of the image management method according to the present invention is an embodiment in which an image sever calculates a totaled result of user attributes and determines based on a reference and the totaled result whether an image file or user attributes is to be processed.

It should be noted here that the reference means a reference for determining whether an image file is to be processed. For instance, this reference is a table or a script containing information such as a numeric value or a keyword.

When it is said that a script containing a keyword is used as the reference, it means that multiple references can be combined with each other using the script.

For instance, in the case of a search for photographs contributed between today and 10 days ago, given a keyword "flower", and taken by Japanese or American photographers, the script becomes as follows.

(Example of Script)

```
(find lateday<10) and (find keyword = "flower") and ((find
madein = "Japan") or (find madein = "USA"))
```

This is a part corresponding to a search formula for creating a gathering in the case of a predetermined search.

As the image file processing, generally, it is possible to cite processing in which the image file is deleted, moved, reduced, changed in compression ratio, downloaded, uploaded, or copied, for instance.

Also, as the user attribute processing, it is possible to cite changing of the user attributes. As this user attribute changing, it is possible to cite processing in which the display/non-display, download permission, editing permission, deletion permission, or the like for a user attribute contained in attribute information is changed, for instance.

It should be noted here that the attribute information means all of image-related information.

Also, the user attributes refer to user information set for each user of a predetermined image.

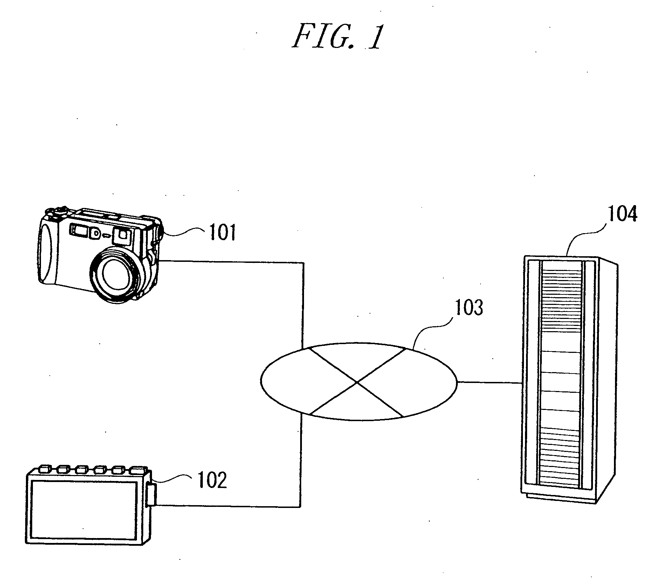

FIG. 1 is an overall schematic diagram of a system to which the first embodiment of the image management method according to the present invention is applied.

As shown in FIG. 1, the system, to which the first embodiment of the image management method according to the present invention is applied, includes an image input terminal 101, an image display terminal 102, and an image server 104 that are connected to each other through a network 103.

The image input terminal 101 is a terminal for inputting an image to be transmitted to the image server 104.

The image input terminal 101 performs an operation for inputting an image. As the image input terminal 101, for instance, it is possible to cite a digital camera.

The image display terminal 102 is a terminal that inputs an image to be transmitted to the image server 104. Also, the image display terminal 102 is a terminal that displays an image transmitted from the image server 104. As the image display terminal 102, it is possible to cite an electronic photo frame having a function, with which it is possible to perform inputting through connection with a peripheral device such as a camera or a memory card, and a display function, for instance.

The image server 104 records image files and attribute information. Also, various kinds of information recorded in the image server 104 are sharable among multiple image display terminals and image input terminals.

The information recorded in the image server 104 and shared among the multiple image display terminals and image input terminals will be referred to as the shared information.

In the example shown in FIG. 1, the number of the image input terminal 101, the number of the image display terminal 102, and the number of the image server 104 are each set at one, although these numbers are not limited to this and may be set at an arbitrary number larger than one.

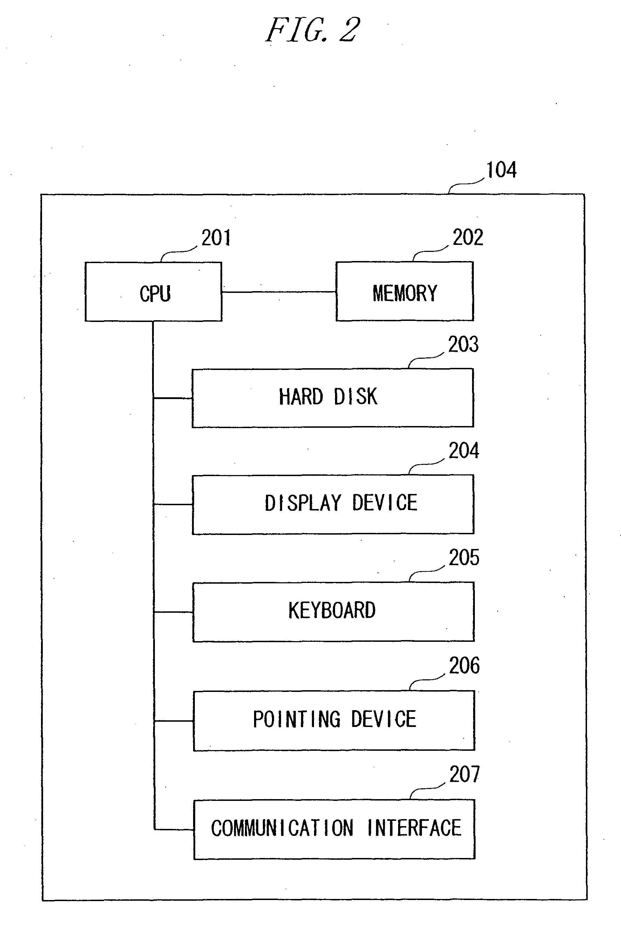

Next, an internal construction of the image server 104 shown in FIG. 1 will be described with reference to FIG 2. FIG. 2 is a hardware construction diagram of the image server 104 shown in FIG. 1.

The image server 104 includes a CPU 201 that executes programs, a memory 202 that records the programs to be executed by the CPU 201 and data to be processed by the CPU 201, a hard disk 203 that records programs and data, a display device 204 that displays information such as a menu, an icon, and a message, a keyboard 205 for inputting character data, a pointing device 206 for manipulating the menu and the icon on the display device 204, and a communication interface 207 that accesses the network.

The CPU 201 executes the programs recorded in the memory 202 and provides a function as the image server 104.

The memory 202 records the programs to be executed by the CPU 201 and the data to be processed by the CPU 201.

The hard disk 203 records the programs to be executed by the CPU 201, the data to be processed by the CPU 201, and the like. Note that the programs to be executed by the CPU 201, the data to be processed by the CPU 201, and the like may be recorded on an appropriate recording medium, such as a CD-ROM, a DVD-ROM, a DVD-R, a DVD-RAM, or an MO, other than the hard disk. In this case, the image server 104 may be provided with a not-shown recording medium reading device for a CD-ROM, a DVD-ROM, a DVD-R, a DVD-RAM, an MO, or the like.

The hard disk 203 constitutes a database of the image server 104. However, in the present invention, the database of the image server 104 may not be necessarily constituted by the hard disk but may be constructed from a database server connected to the image server 104, for instance.

The display device 204 displays information inputted by a user and information of a menu, an icon, a message, or the like of a program developed by the user. As the display device 204, a CRT, a liquid crystal display, or the like is used, for instance.

The keyboard 205 is used to input character data. The pointing device 206 is used to manipulate the menu and icon displayed on the display device 204.

As the pointing device 206, it is possible to use a mouse, a trackball, an electrostatic indicator device, a laser indicator device, or a touch panel, for instance.

The communication interface 207 accesses the network and communicates with another device or terminal on the network in response to an instruction from the CPU 201.

Also, the above description of the internal construction of the image server 104 made using FIG. 2 is also applicable as the description of internal constructions of the image input terminal 101 and the image display terminal 102 shown in FIG. 1.

However, it is possible to omit the members shown in FIG. 2 as appropriate in accordance with the characteristics of the terminals. For instance, in the case of the image display terminal, it is possible to omit the keyboard. Also, for instance, in the case of the image server, it is possible to omit the display device, the key, and the pointing device.

Therefore, the description of the internal constructions of the image input terminal 101 and the image display terminal 102 shown in FIG. 1 is substantially the same as the above description of the internal construction of the image server 104 made using FIG. 2 and therefore will be omitted.

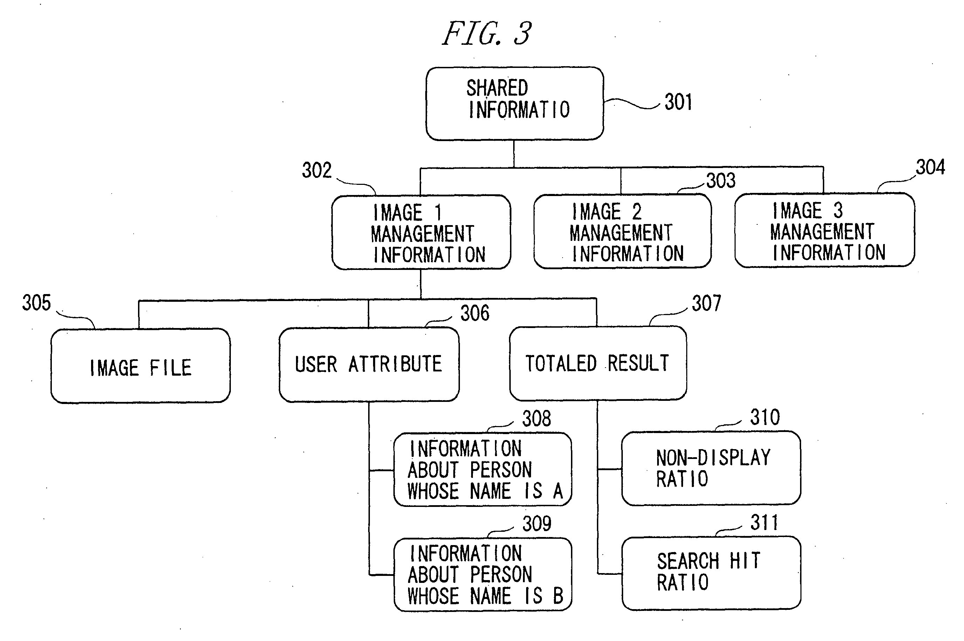

Next, information recorded in the image server 104 shown in FIG. 1 will be described with reference to FIG. 3. FIG. 3 is a conceptual diagram of shared information recorded in the image server 104 shown in FIG. 1.

As shown in FIG. 3, shared information 301 contains management information for at least one image.

Image 1 management information 302, image 2 management information 303, and image 3 management information 304 are each management information for an image.

It should be noted here that image management information, user attributes, and totaled results are contained in the attribute information of images used in this embodiment.

Also, an image file, user attributes, and a totaled result are associated with each piece of image management information. In the example shown in FIG. 3, an image file 305, user attributes 306, and a totaled result 307 are associated with the image 1 management information 302.

Each image file is data of an image. Therefore, the image file 305 is image data of an image 1.

The user attributes are data indicating the attributes of each user of each image. Therefore, the user attributes 306 are the attributes of each user of the image 1.

For instance, information 308 about a person, whose name is A, and information 309 about a person, whose name is B, are recorded in the user attributes 306.

The totaled result is data showing a totaled result among each user of each image. Therefore, the totaled result 307 shows a totaled result among each user of the image 1.

For instance, a non-display ratio 310 and a search hit ratio 311 with respect to the image 1 are recorded in the totaled result 307.

It should be noted here that the shared information in this embodiment is not limited to the example described above and the image management information may be associated with the user attributes. Also, it does not matter whether the structure of the shared information is a tree structure or a table structure. The example shown in FIG. 3 is an example in which the user attributes are associated with the image management information and the shared information is managed using a tree structure. Further, storage of a part of the information may be omitted. The totaled result may be created at each time of use.

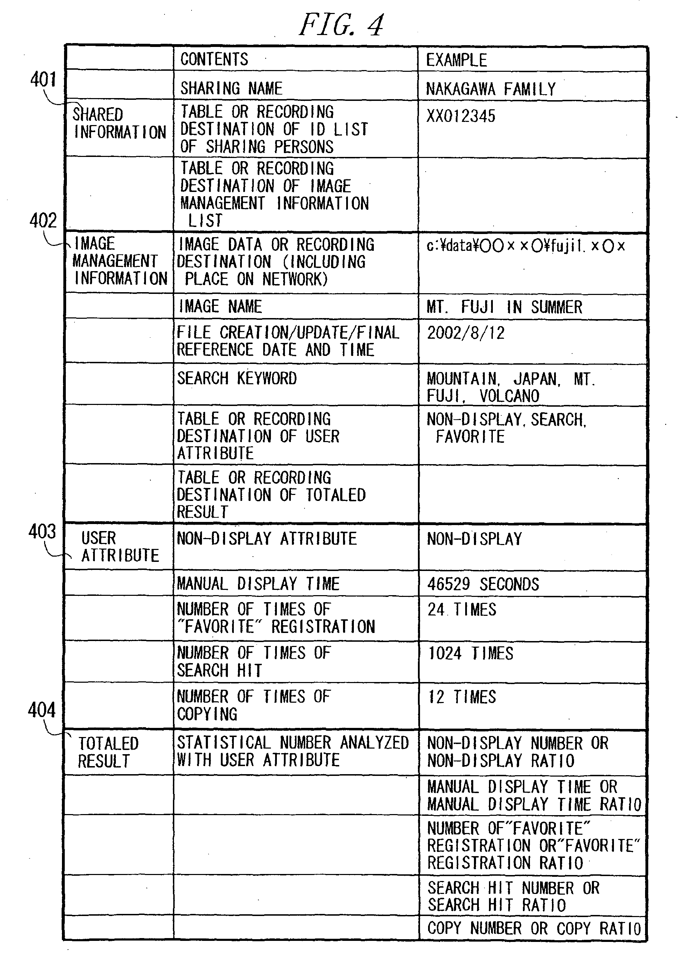

Next, the shared information recorded in the image server 104 shown in FIG. 1 will be described in more detail with reference to FIG. 4. FIG. 4 shows a table of the shared information recorded in the image server 104 shown in FIG. 1.

The table shown in FIG. 4 contains shared information 401, image management information 402, user attributes 403, and a totaled result 404.

The image management information 402 is management information for each image. The user attributes 403 are information for each image and also for each user. The totaled result 404 is information for each image.

As shown in FIG. 4, in the shared information 401, a sharing name, a table or recording destination of an ID list of sharing persons, and a table or recording destination of an image management information list are recorded as its contents.

In FIG. 4, as an example of the sharing name, "Nakagawa family" is illustrated.

In FIG. 4, as an example of the table or recording destination of the ID list of the sharing persons, "XX012345" is illustrated.

Also, in the image management information 402, image data or a recording destination (including a place on the network), an image name, a file creation/update/final reference date and time, a search keyword, a user attribute table or recording destination, and a totaled result table or recording destination are recorded as its contents.

In FIG. 4, as an example of the image data or recording destination (including a place on the network), "c: ¥data¥OO××O¥fujil.×O×" is illustrated.

Also, in FIG. 4, as an example of the image name, "Mt. Fuji in Summer" is illustrated.

Further, in FIG. 4, as an example of the file creation/update/final reference date and time, "2002/08/12" is illustrated.

Still further, in FIG. 4, as an example of the search keyword, "mountain", "Japan", "Mt. Fuji", and "volcano" are illustrated.

Also, in FIG. 4, as an example of the user attribute table or recording destination, "non-displaying", "search", and "favorite" are illustrated.

Information that is the contents of the image management information 402 may be information given by a creator of the image and transmitted from the image input terminal or the image display terminal, may be automatically created by the image server, or may be a combination thereof, for instance. For instance, in the case of a search keyword, it is possible for the image server to analyze the image and automatically create a search keyword for the image.

Also, in the user attributes 403, a non-display attribute, a manual display time , the number of times of "Favorite" registration, the number of times of search hit, and the number of times of copying are recorded as its contents. However, the record information recorded as the user attributes is not limited to these information and may also contain other information. For instance, as the record information recorded as the user attributes, information indicating editing permission, deletion permission, and the like are also conceivable.

The non-display attribute means information set for each user of each predetermined image and indicating whether the image is to be displayed.

The manual display time means a display time during which a predetermined image is displayed on the image display terminal in accordance with a wish of the user.

More specifically, the manual display time refers to a display time during which the image is displayed through manual manipulation while stopping automatic displaying.

This manual display time is a total of time periods during which the image is not displayed automatically but is displayed by the user at his/her own wish.

Also, the manual displaying means displaying of the image by the user at his/her own wish.

Like the manual display time described above, it is possible to define the number of times of manual displaying in the image management information 402.

The number of times of manual displaying means the number of times a predetermined image is displayed on the image display terminal in accordance with a wish of the user.

More specifically, the number of times of manual displaying refers to the number of times the image is displayed through manual manipulation while stopping automatic displaying.

The number of times of manual displaying is a total of the number of times the image is not displayed automatically but is displayed by the user at his/her own wish.

Also, the manual displaying means displaying of the image by the user at his/her own wish.

With reference to the manual display time and the number of times of manual displaying, it is possible to judge to what degree the user regards the image as his/her favorite.

The number of times of "Favorite" registration means the number of times of registration of a predetermined image by each user as his/her favorite image into a terminal such as a personal computer or an image display terminal.

The number of times of search hit means the number of times of search hit of a predetermined image by each user as his /her favorite image into a terminal such as a personal computer or an image display terminal.

The number of times of copying means the number of times a predetermined image is copied by each user into a terminal such as a personal computer or an image display terminal.

The copy destination may be an image display terminal in the same community, an image display terminal in another community, or both of them.

Here, the community means a group of one or multiple persons among whom data is shared.

For one channel of the image display terminal, one community is set. Here, the channel means a button or menu to which a function is allocated. The function is selected with this button or menu.

In FIG. 4, as an example of the non-display attribute. "non-displaying" is illustrated.

Also, in FIG. 4, as an example of the manual display time, "46529 seconds" is illustrated.

Further, in FIG. 4, as an example of the number of times of "Favorite" registration, "24 times" is illustrated.

Still further, in FIG. 4, as an example of the number of times of search hit, "1024 times" is illustrated.

Also, in FIG. 4, as an example of the number of times of copying, "12 times" is illustrated.

Information that is the contents of the user attributes 403 may be set based on information transmitted from the image input terminal or the image display terminal, may be set through computation processing by the image server, or may be set through combination thereof.

Also, as described above, in the present invention, the image management information 402, the user attributes 403, and the totaled result 404 constitute the image attribute information.

Also, in the totaled result 404, a statistical number calculated by the image server 104 from the user attributes is recorded. As examples of this statistical number, it is possible to cite a non-display number or a non-display ratio, a manual display time or a manual display time ratio, the number of "Favorite" registration or a "Favorite" registration ratio, a search hit number or a search hit ratio, and a copy number or a copy ratio.

The non-displaying number refers to a value calculated as the total sum of the number of times of non-displaying of user attributes in a predetermined image.

The non-displaying ratio means a value calculated based on a number obtained by dividing the total sum of the non-displaying of each user attribute of a predetermined image by the total sum of the non-displaying of every image.

The manual display time means a value calculated as the total sum of the time periods of manual displaying of a predetermined image of each user attribute.

The manual display time ratio means a value calculated based on a number obtained by dividing the total sum of the manual display time periods of each user attribute of a predetermined image by the total sum of the manual display time periods of every image.

It should be noted here that it is also possible to define the number of times of manual displaying and the radio of the number of times of manual displaying. It is possible to use the number of times of manual displaying and the radio of the number of times of manual displaying in the same manner as the manual display time and the manual display time ratio.

The number of times of manual displaying means a value calculated as the total sum of the number of times of manual displaying of a predetermined image of each user attribute.

The ratio of the number of times of manual displaying means a value calculated based on a number obtained by dividing the total sum of the number of manual displaying of each user attribute of a predetermined image by the total sum of the number of manual displaying of every image.

The number of "Favorite" registration means a value calculated as the total sum of the number of times of "Favorite" registration of a predetermined image of each user attribute. This will be referred to as a first example of the number of "Favorite" registration.

It should be noted here that as a second example of the number of "Favorite" registration, it is possible to use the number of persons who registered a predetermined image in the use attributes.

It should be noted here that as a third example of the number of "Favorite" registration, it is possible to use the number of terminals that registered a predetermined image in the use attributes.

It is possible to select one of the first example, the second example, and the third example of the number of "Favorite" registration as appropriate for use and it is further possible to use the examples in combination.

The "Favorite" registration ratio means a value calculated based on a number obtained by dividing the total sum of the number of "Favorite" registration of a predetermined image of each user attribute by the total sum of the number of "Favorite" registration of every image. This will be referred to as a first example of the favorable registration ratio.

It shouldbenotedhere that as a second example of the "Favorite" registration ratio, it is possible to use a value based on a number obtained by dividing the number of persons who registered a predetermined image in the user attributes by the number of all persons who made "Favorite" registration for any images.

Also, as a third example of the "Favorite" registration ratio, it is possible to use a value based on a number obtained by dividing the number of terminals that registered a predetermined image in the user attributes by the number of all terminals that made "Favorite" registration for any images.

It is possible to select one of the first example, the second example, and the third example of the "Favorite" registration ratio as appropriate for use and it is further possible to combine the examples in an arbitrary manner for use.

The search hit number refers to a value calculated as the total sum of the number of times of search hit of the predetermined image of the user attributes.

The search hit ratio means a value calculated based on a number obtained by dividing the total sum of the number of times of search hit of the predetermined image of the user attributes by the total sum of the number of times of search hit of every image.

The copy number refers to a value calculated as the total sum of the number of times of copying of the predetermined image of the user attributes.

The copy ratio means a value calculated based on a number obtained by dividing the total sum of the number of times of copying of the predetermined image of the user attributes by the total sum of the number of times of copying of every image.

Next, an operation in the first embodiment of the image management method according to the present invention will be described with reference to the drawings. The present invention is an invention in which an image file or attribute information recorded in the image server 104 is processed.

Also, in the present invention, as a case where the image file or attribute information is processed, there are a case in which the processing is performed in response to a request from the image display terminal or the image input terminal, and a case where the processing is performed in response to a request from the image server. Hereinafter, these two cases will be described in succession. Note that in the following description, as an example of the former case, a case will be described in which a processing request has been received from the image display terminal.

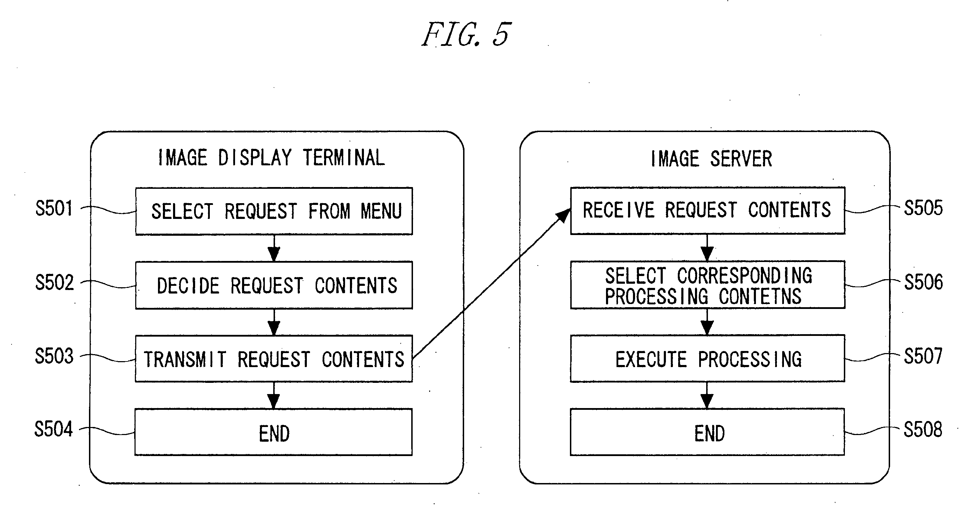

First, a case where an image file or attribute information is processed in response to a request from the image display terminal will be described with reference to FIG. 5. FIG. 5 is a flowchart of an operation in the case where an image file or attribute information is processed in response to a request from the image display terminal in the first embodiment of the image management method according to the present invention.

First, the image display terminal selects a request from a menu (S501).

Then, the image display terminal determines the contents of the request (S502), transmits the request contents to the image server (S503), and ends the operation (S504).

On the other hand, the image server receives the request contents (S505), selects corresponding processing contents (S506), executes processing (S507), and ends the operation (S508).

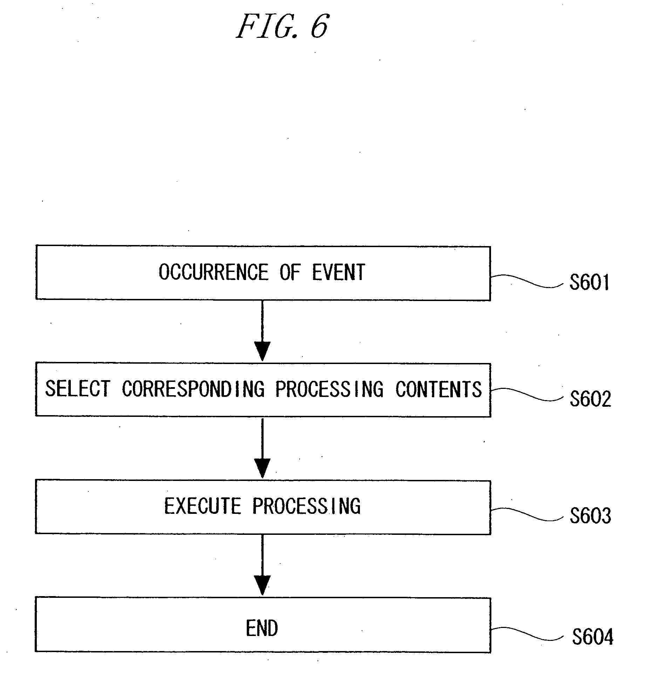

Next, a case where the processing is performed in response to a request from the image server will be described with reference to FIG. 6. FIG. 6 is a flowchart of an operation in the case where an image file or attribute information is processed in response to a request from the image server in the first embodiment of the image management method according to the present invention.

First, the image server detects the occurrence of an event (S601). As an example of this event, it is possible to cite a case where a disk capacity has run out at the image server.

Next, the image server selects corresponding processing contents (S602).

Next, the image server executes the selected processing (S603) and ends the operation (S604).

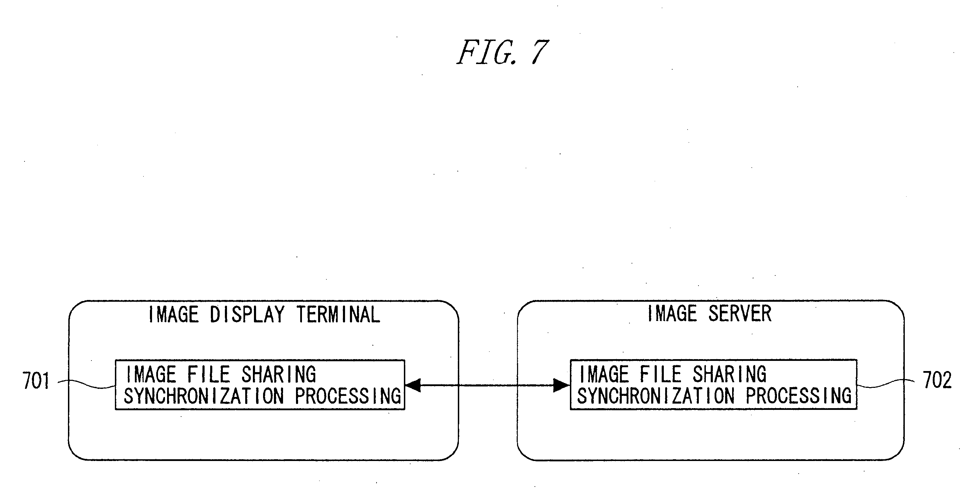

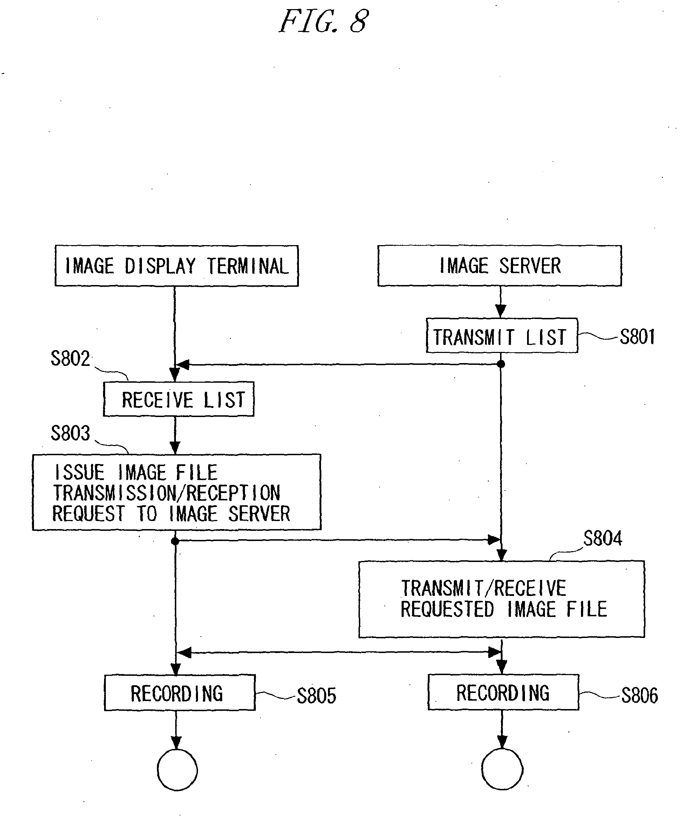

Next, image file sharing synchronization processing in the first embodiment of the image management method according to the present invention will be described with reference to FIGS. 7 and 8. FIG. 7 is a conceptual diagram of a case where the image display terminal and the image server perform the image file sharing synchronization processing in the first embodiment of the image management method according to the present invention and FIG. 8 is a flowchart of an operation in the case where the image display terminal and the image server perform the image file sharing synchronization processing in the first embodiment of the image management method according to the present invention.

As shown in FIG. 7, in the first embodiment of the image management method according to the present invention, when the image display terminal and the image server perform the image file sharing synchronization processing, image file sharing synchronization processing 701 and image file sharing synchronization processing 702 are executed by the image display terminal and the image server, respectively.

This image file sharing synchronization processing will be further described with reference to FIG. 8. As shown in FIG. 8, in a predetermined case, the image server transmits a list of images that should be shared to the image display terminal (S801). Here, this predetermined case may be a case where a predetermined time has reached, for instance. Also, aside from this, the predetermined case may be a case where a predetermined event has occurred.

Next, the image display terminal receives the list (S802) and requests, based on this list, the image server to transmit each image file that is on the list but is not recorded in itself and to receive each image file recorded in its own recording section (S803). Note that transmission of an image file from the image server to the image display terminal will also be hereinafter referred to as downloading of the image file.

On receiving this request, the image server transmits each requested image file to the image display terminal and also receives each image file transmitted from the image display terminal (S804).

Then, the image display terminal records each image file received from the image server in the recording section (S805).

Then, the image server records each image file received from the image display terminal in the recording section (S806).

It should be noted here that the operation shown in FIG. 8 may be executed by interchanging the image display terminal and the image server.

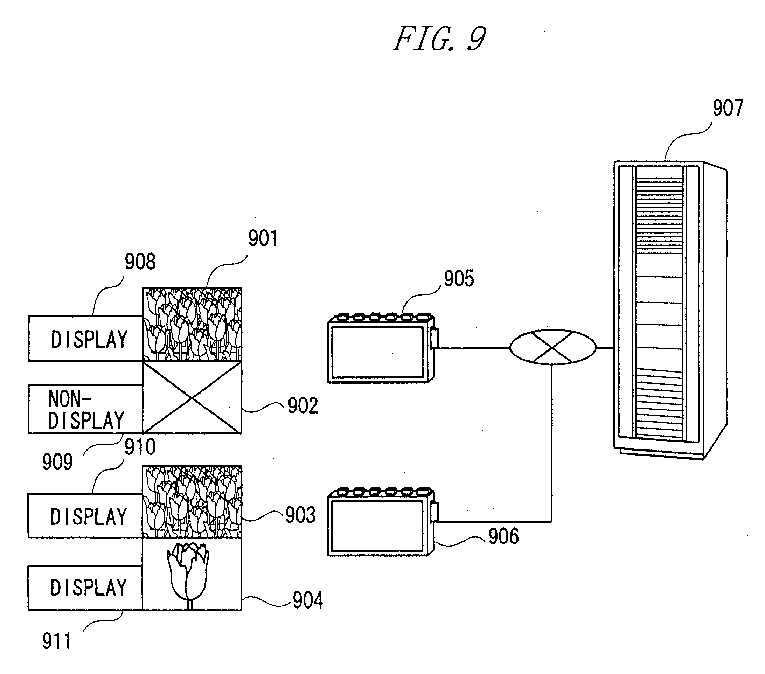

Next, a case where attribute information set at the image display terminal is recorded in the image display terminal will be described with reference to FIGS. 9, 10, and 11.

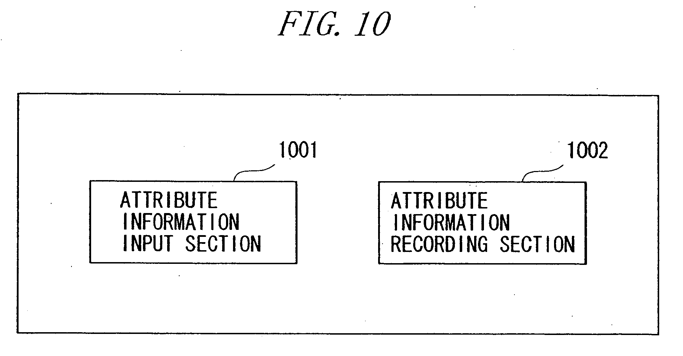

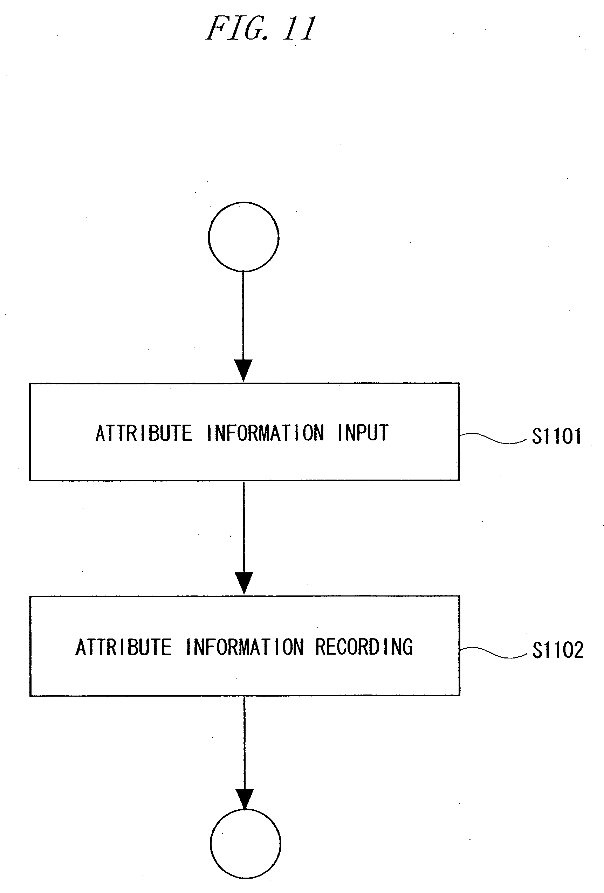

FIG. 9 is a schematic system diagram for explaining an operation in the case where the attribute information set at the image display terminal is recorded in the image display terminal in the first embodiment of the image management method according to the present invention, FIG. 10 is a block diagram of the image display terminal used in the case where the attribute information set at the image display terminal is recorded in the image display terminal in the first embodiment of the image management method according to the present invention, and FIG. 11 is a flowchart of the operation in the case where the attribute information set at the image display terminal is recorded in the image display terminal in the first embodiment of the image management method according to the present invention.

It should be noted here that as an example of the attribute information recorded in the image display terminal, it is possible to cite the non-display attribute shown in FIG. 4.

As shown in FIG. 9, an image display terminal 905 and an image display terminal 906 are connected to an image server 907 through a network.

In the example shown in FIG. 9, the image display terminal 905 sets display attribute information 908 for an image 901 and sets non-display attribute information 909 for an image 903.

Also, the image display terminal 906 sets display attribute information 903 for an image 903 and sets display attribute information 911 for an image 904. Note that the image 901 and the image 903 are the same image and the image 902 and the image 904 are the same image.

Therefore, in the example shown in FIG. 9, the image display terminal 905 and the image display terminal 906 respectively give different attribute information to the image 902 and the image 904.

Next, functions of the image display terminals 905 and 906 shown in FIG. 9 will be described with reference to FIG. 10. As shown in FIG. 10, the image display terminals shown in FIG. 9 each include an attribute information input section 1001 and an attribute information recording section 1002.

The attribute information input section 1001 inputs attribute information for each image.

The attribute information recording section 1002 records the attribute information inputted at the attribute information input section 1001.

The function of each section described above is realized through cooperation between the CPU of the image display terminal and a program recorded in a memory or the like or another member.

Next, the operation in the case where the attribute information set at the image display terminal is recorded in the image display terminal will be described with reference to FIG. 11.

As shown in FIG. 11, attribute information for each image is inputted into the image display terminal from a user or the like (S1101).

Next, the image display terminal puts the attribute information recording section into recording the inputted attribute information (S1102) and ends the operation.

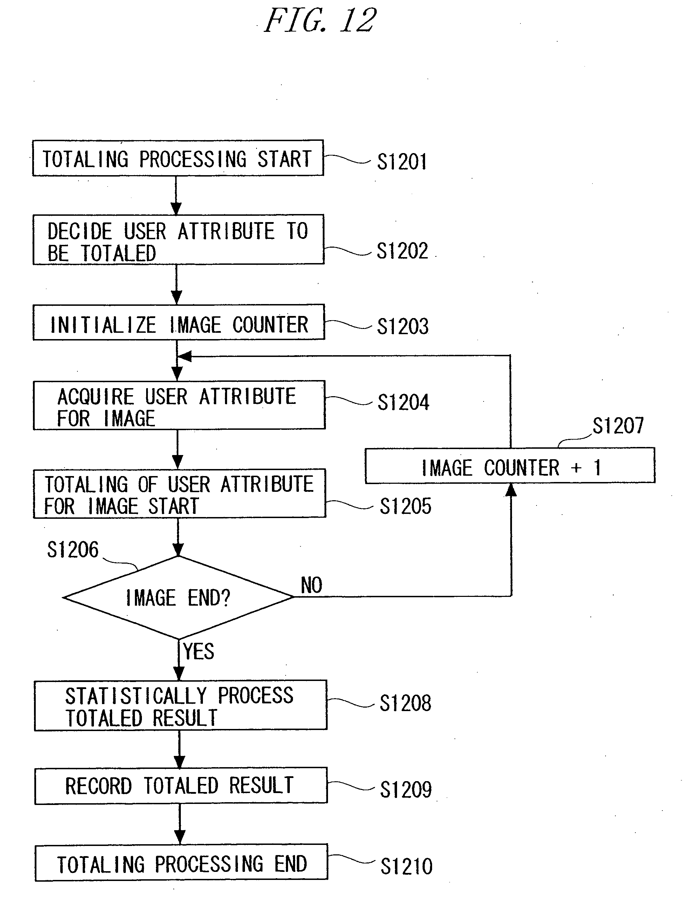

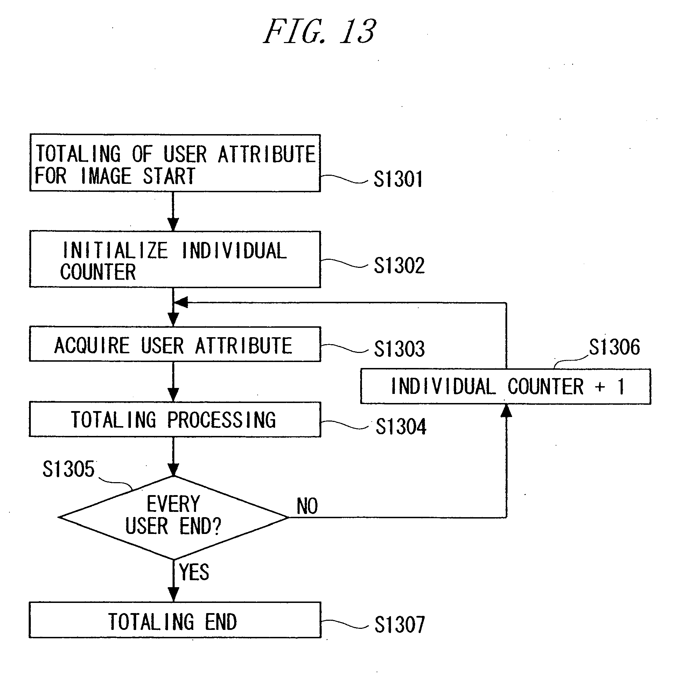

Next, totaling processing in this embodiment will be described with reference to FIGS. 12 and 13. FIGS. 12 and 13 are flowcharts of an operation at the time when the image server calculates a totaled result of user attributes in the first embodiment of the image management method according to the present invention.

As shown in FIG. 12, the image server first starts the totaling processing and then decides user attributes to be totaled (S1201, S1202).

Next, the image server initializes an image counter (S1203) .

Next, the image server acquires the user attributes of an image indicated by the image counter and starts totaling of the user attributes of the image (S1204, S1205). This operation in S1205 will be described later with reference to FIG. 13.

Next, the image server judges whether the totaling of the user attributes of every image is ended (S1206). When the totaling is not yet ended (No), the processing proceeds to S1207 in which the image server increments the image counter by one. Then, the processing proceeds to S1204.

When the totaling of the user attributes of every image is ended, the processing proceeds to S1208.

In S1208, the image server performs statistical processing on the totaled result (S1208). As an example of this statistical processing, it is possible to cite processing, in which a ratio among user attributes of each image is computed, such as the computation of non-display ratio or the like described above with reference to FIG. 4.

Then, the image server records the totaled result of each image and ends the totaling processing (S1209, S1210).

Next, the image user attribute totaling shown in S1205 will be described with reference to FIG. 13.

After starting the image user attribute totaling, the image server first initializes an individual counter (S1301, S1302).

Next, the image server acquires the user attributes of a user indicated by the individual counter and performs totaling processing of the user attributes (S1303 , S1304). As an example of this totaling processing, it is possible to cite processing, in which the total sum of predetermined user attributes of each user is calculated, such as the non-display number total sum obtaining processing described above with reference to FIG. 4.

Here, the user attributes acquired in S1303 may be user attributes transmitted from the image display terminal like the non-display attribute shown in FIG. 4 or may be user attributes calculated by the image server like the number of times of "Favorite" registration shown in FIG. 4.

Next, the image server judges whether totaling of the user attributes of every user is ended. When the totaling is not yet ended (No), the processing proceeds to S1306 in which the image server increments the individual counter by one. Then, the processing proceeds to S1303.

When the totaling of the user attributes of every user is ended (Yes), the processing proceeds to S1307 in which the user attribute totaling is ended.

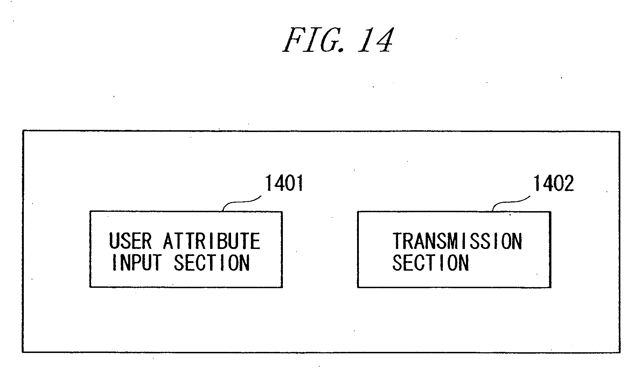

Next, as an example of totaling of totaled results, an operation in the case where the image server calculates a totaled result for each image based on the non-display attribute that is a user attribute inputted into the image display terminal will be described with reference to FIGS. 14 to 18.

FIG. 14 is a block diagram of the image display terminal used in the case where the image server receives the user attributes inputted into the image display terminal and calculates a totaled result for each image in the first embodiment of the image management method according to the present invention.

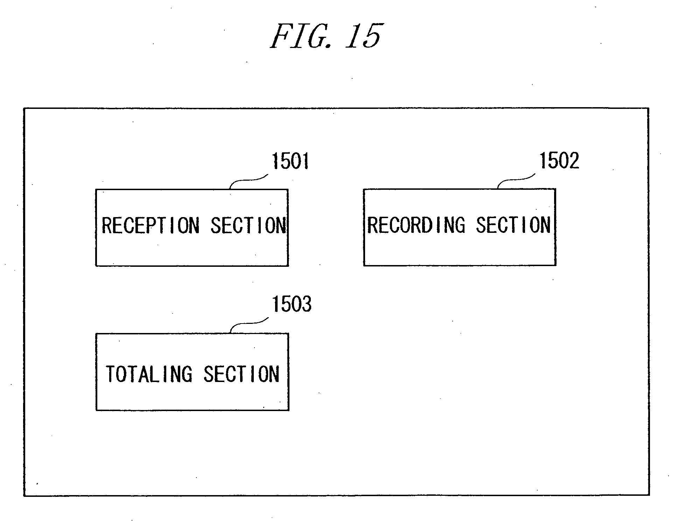

Also, FIG. 15 is a block diagram of the image server used in the case where the image server receives the user attributes inputted into the image display terminal and calculates a totaled result for each image in the first embodiment of the image management method according to the present invention.

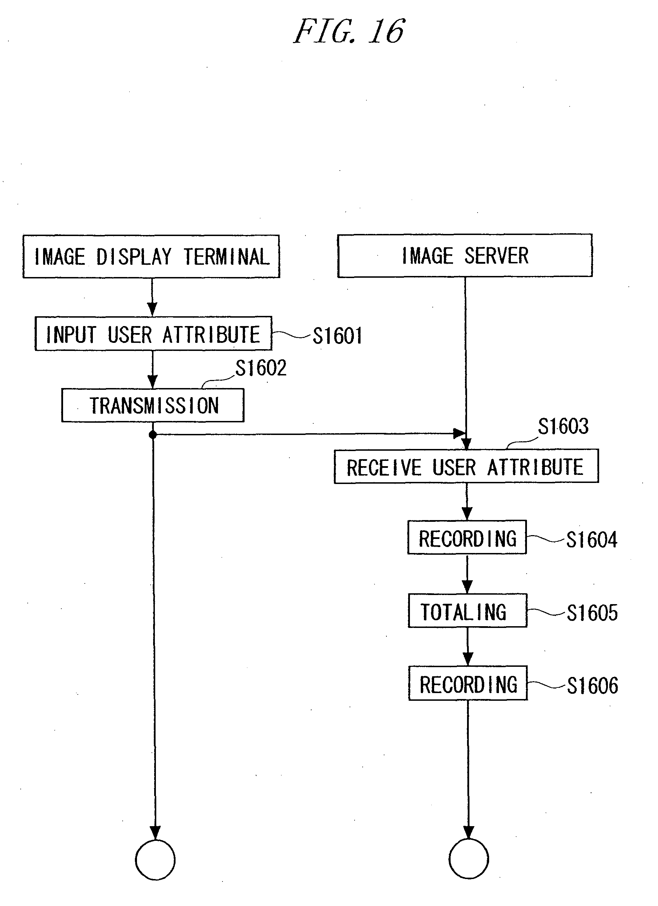

Also, FIG. 16 is a flowchart of the operation in the case where the image server receives the user attributes inputted into the image display terminal and calculates a totaled result for each image in the first embodiment of the image management method according to the present invention.

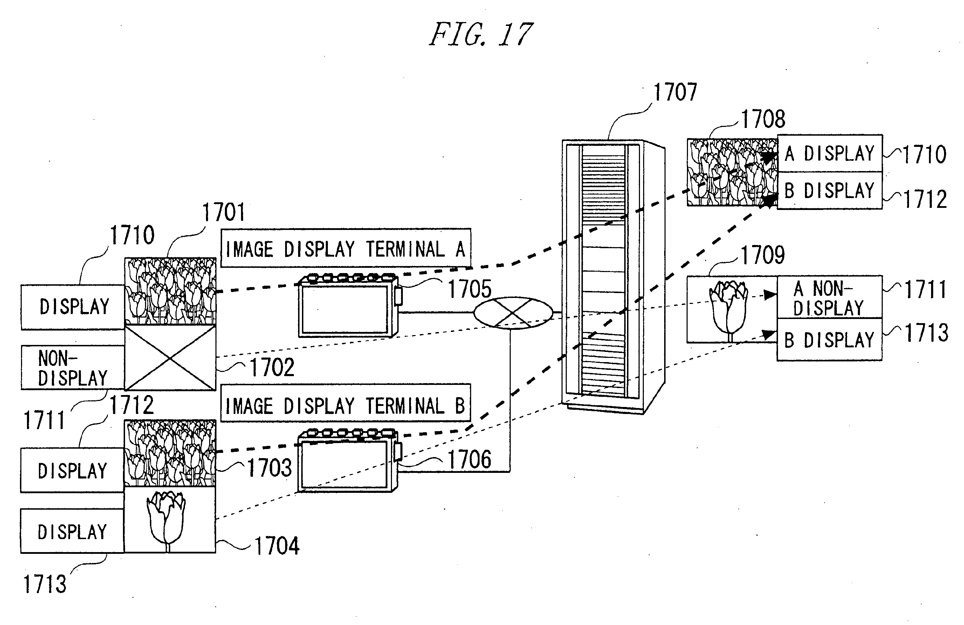

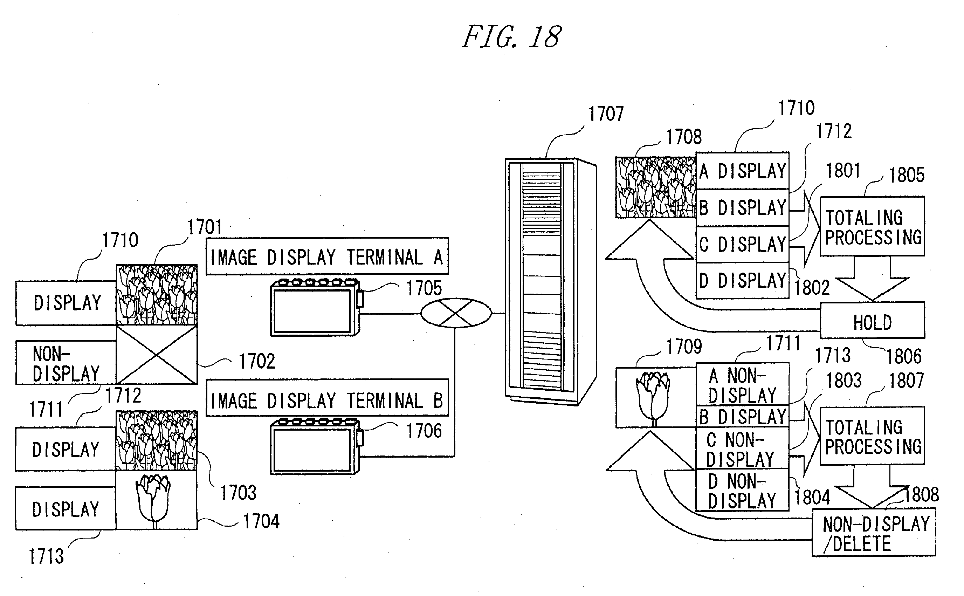

FIGS. 17 and 18 are schematic system diagrams for explaining the operation in the case where the image server receives the user attributes inputted into the image display terminal and calculates a totaled result for each image in the first embodiment of the image management method according to the present invention.

First, functions of the image display terminal in the case where the image server receives the user attributes inputted into the image display terminal and calculates a totaled result for each image will be described with reference to FIG. 14.

As shown in FIG. 14, in this case, the image display terminal includes a user attribute input section 1401 and a transmission section 1402.

The user attribute input section 1401 inputs a non-display attribute as a user attribute for each image.

The transmission section 1402 transmits the user attribute inputted at the user attribute input section 1401 to the image server.

The function of each section described above is realized through cooperation between the CPU of the image display terminal and a program recorded in a memory or the like or another member.

Next, functions of the image server in the case where the image server receives a non-display attribute as a user attribute inputted into the image display terminal and calculates a totaled result for each image will be described with reference to FIG. 15.

As shown in FIG. 15, in this case, the image server includes a reception section 1501, a recording section 1502, and a totaling section 1503.

The reception section 1501 receives the user attributes of each image transmitted from each image display terminal.

The recording section 1502 records the receiveduser attributes and totaled results.

The totaling section 1503 totals the user attributes recorded in the recording section 1502.

The function of each section described above is realized through cooperation between the CPU of the image server and a program recorded in a memory or the like or another member.

Next, the operation in the case where the image server receives the user attributes inputted into the image display terminal and calculates a totaled result for each image will be described with reference to FIG. 16.

As shown in FIG. 16, first, the image display terminal transmits inputted user attributes to the image server (S1601, S1602).

Next, the image server receives and records the user attributes transmitted from the image display terminal (S1603, S1604).

Next, the image server totals the recorded user attributes and records the totaled result (S1605, S1606).

Next, totaling of totaled results in the image management method according to the present invention will be described in more detail with reference to FIGS. 17 and 18. FIGS. 17 and 18 are schematic diagrams in the case where non-display attributes transmitted from image display terminals as attribute information to be totaled are totaled.

As shown in FIG. 17, an image display terminal A 1705 and an image display terminal B 1706 are connected to an image server 1707 through a network. Also, although not illustrated in FIG. 17, to the image server 1707, an image display terminal C and an image display terminal D are also connected through the network.

The image display terminal A 1705 sets display information as attribute information 1710 as to an image 1701 and sets non-display information as attribute information 1711 as to an image 1702. Note that the attribute information shown in FIGS. 17 and 18 means user attributes.

Also, the image display terminal B 1706 sets display information as attribute information 1712 as to an image 1703 and sets display information as attribute information 1713 as to an image 1704.

Here, the image 1701 and the image 1703 are the same image and the image 1702 and the image 1704 are the same image.

As a result, as shown in FIG. 17, in the image server 1707, for an image 1708 that is the same image as the image 1701, attribute information 1710 set by the image display terminal A and attribute information 1712 set by the image display terminal B are recorded.

Also, as shown in FIG. 17, in the image server 1707, for an image 1709 that is the same image as the image 1702, attribute information 1711 set by the image display terminal A and attribute information 1713 set by the image display terminal B are recorded.

Also, although not illustrated in FIG. 17, the image display terminal C sets display information as attribute information as to the same image as the image 1701 and sets non-display information as attribute information as to the same image as the image 1702. The set attribute information is recorded in the image server 1707 for each image like the attribute information set by the image display terminal A 1701 and the image display terminal B 1706.

Also, although not illustrated in FIG. 17, the image display terminal D sets display information as attribute information as to the same image as the image 1701 and sets non-display information as attribute information as to the same image as the image 1702. The set attribute information is recorded in the image server 1707 for each image like the attribute information set by the image display terminal A 1701 and the image display terminal B 1706.

Next, as shown in FIG. 18, the image server 1707 performs totaling processing based on the attribute information recorded for each image.

That is, as the attribute information as to the image 1708, the attribute information 1710 set by the image display terminal A 1705, the attribute information 1712 set by the image display terminal B 1706, the attribute information 1801 set by the image display terminal C, and the attribute information 1802 set by the image display terminal D are recorded in the image server 1707.

The image server 1707 performs totaling processing 1805 of these attribute information and outputs a result of the processing as the totaled result as to the image 1708. This totaled result becomes attribute information as to the image 1708.

Hereinafter, as the totaling processing of the attribute information, totaling processing of display attributes will be described. The totaling processing 1805 shown in FIG. 18 is processing for calculating a total sum of non-display attributes for the image 1708. Therefore, in the example shown in FIG. 18, the totaled result becomes zero as to the non-display number.

With reference to this totaled result, for instance, the image server 1707 performs processing 1806 in which the image file of the image 1708 recorded in the image server 1707 is held in the image server 1707 as it is.

Similarly, as the attribute information as to the image 1709, the attribute information 1710 set by the image display terminal A, the attribute information 1713 set by the image display terminal B, the attribute information 1803 set by the image display terminal C, and the attribute information 1804 set by the image display terminal D are recorded in the image server 1707.

The image server 1707 performs totaling processing 1807 of these attribute information and outputs a result of the processing as the totaled result as to the image 1709. This totaled result becomes attribute information as to the image 1709.

In the example shown in FIG. 18, the totaling processing 1807 is processing in which a total sum of non-display attributes is calculated for the image 1709. Therefore, in the example shown in FIG. 18, a totaled result 1808 becomes three as to the non-display number.

With reference to this totaled result, for instance, the image server 1707 performs processing 1808 in which the attribute information 1713 as to the image 1709 set by the image display terminal B 1706 is changed to non-display information or the image file of the image 1709 recorded in the image server 1707 is deleted.

However, the processing 1806 and the processing 1808 shown in FIG. 18 are merely examples and the processing performed in the present invention is not limited to these processings.

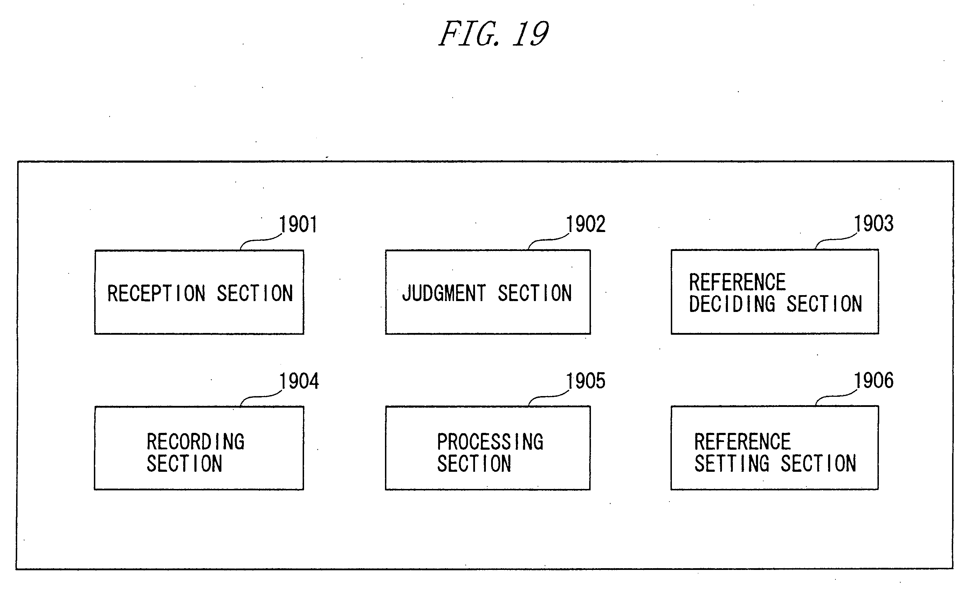

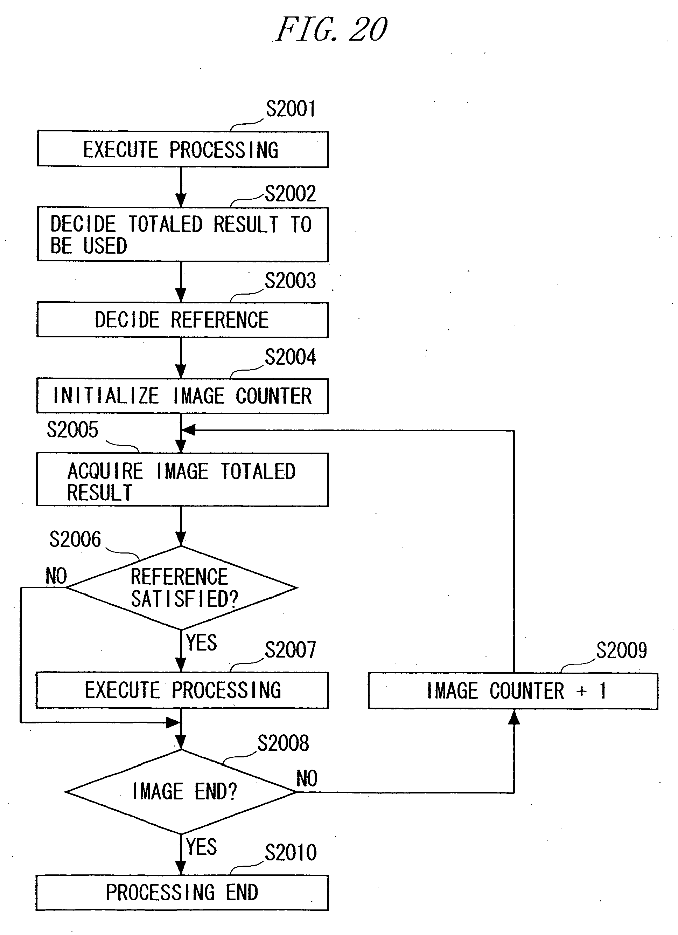

Next, the steps (S507, S603) shown in FIGS. 5 and 6, in which the processing by the image server is executed, will be described with reference to FIGS. 19 and 20.

FIG. 19 is a block diagram showing internal functions of the image server used in the case where the operations in the steps (S507, S603) shown in FIGS. 5 and 6, in which the processing by the image server is executed, are carried out in the first embodiment of the image management method according to the present invention. FIG. 20 is a flowchart of the operations in the steps (S507, S603) shown in FIGS. 5 and 6, in which the processing by the image server is executed, in the first embodiment of the image management method according to the present invention.

As shown in FIG. 19, the image server includes a reception section 1901, a judgment section 1902, a reference deciding section 1903, a recording section 1904, a processing section 1905, and a reference setting section 1906.

When a reference is transmitted from the image display terminal to the image server, the reception section 1901 receives the reference transmitted from the image display terminal. In this embodiment, the reference is used to decide whether an image file is to be processed.

The judgment section 1902 compares a reference decided by the reference deciding section 1903 and a totaled result of each image recorded in the recording section 1905 with each other and judges whether the totaled result of each image satisfies the reference.

The reference deciding section 1903 decides a reference to be used at the judgment section 1902.

The recording section 1904 records the reference transmitted from the image display terminal or the image input terminal, the reference set at the reference setting section 1906, attribute information, and the like. The information recorded in the recording section 1904 may be recorded for each user.

The processing section 1905 performs processing on the image file or attribute information of each image judged as satisfying the reference at the judgment section 1902.

The reference setting section 1906 sets a reference to be used in the case where a reference is set at the image server.

The function of each section described above is realized through cooperation between the CPU of the image server and a program recorded in a memory or the like or another member.

Next, the operations in the steps (S507, S603) shown in FIGS. 5 and 6, in which the processing by the image server is executed, will be described with reference to FIG. 20. Entering into a processing execution step, the image server decides a totaled result to be used (S2001, S2002).

For instance, when a request to delete each image file, whose non-display ratio is equal to or more than a predetermined ratio, has been transmitted from the image display terminal to the image server, the image server decides the non-display ratio among the totaled result 404 shown in FIG. 4 as the totaled result to be used.

Next, the image server decides a reference for judging whether processing is to be executed (S2003). This reference may be transmitted from the image display terminal or the image input terminal to the image server. Alternatively, the reference setting section may be provided for the image server and a user or a reference setting person may input the reference into the image server.

For instance, when a request to delete each image file, whose non-display ratio is equal to or more than a predetermined ratio, has been transmitted from the image display terminal to the image serer, the image server decides that a value of the non-display ratio transmitted from the image display terminal is to be used as the reference.

Next, the image server initializes an image counter (S2004). Then, the image server acquires an image totaled result from the recording section (S2005).

Next, the image server judges whether the acquired totaled result satisfies the decided reference (S2006).

When the acquired totaled result satisfies the decided reference (Yes), the processing proceeds to S2007 in which processing is executed. When the totaled result does not satisfy the reference, the processing proceeds to S2008.

As an example of the processing executed in S2007, it is possible to cite processing in which image file deletion, movement, reduction, compression ratio changing, copying, or the like is performed.

Also, as an example of the contents of the processing executed in S2007, it is possible to cite user attribute changing performed at the image server. As an example of this user attribute changing, it is possible to cite changing between a display attribute and a non-display attribute that are user attributes.

Needless to say, as the processing in S2007, other processing may be executed.

Next, in S2008, the image server judges whether every image that should be processed has been ended. When the image has been ended (Yes), the processing is ended (S2010). When the image has not been ended (No), the processing proceeds to S2009 in which the image counter is incremented by one. Following this, the processing proceeds to S2005.

As described above, in the first embodiment of the image management method according to the present invention, the processing for the image file or user attribute is performed based on whether totaled result of each image satisfies a reference. As a result, it becomes possible to process the image file or user attribute of each image desired by a user.

(Second Embodiment of Image Management Method)

Next, a second embodiment of the image management method according to the present invention will be described. The second embodiment of the image management method according to the present invention is an embodiment in which an image server decides whether an image file is to be downloaded into an image display terminal based on a result of comparison between image attribute information and a reference.

It should be noted here that a reference in this embodiment is the same as the reference in the first embodiment described above.

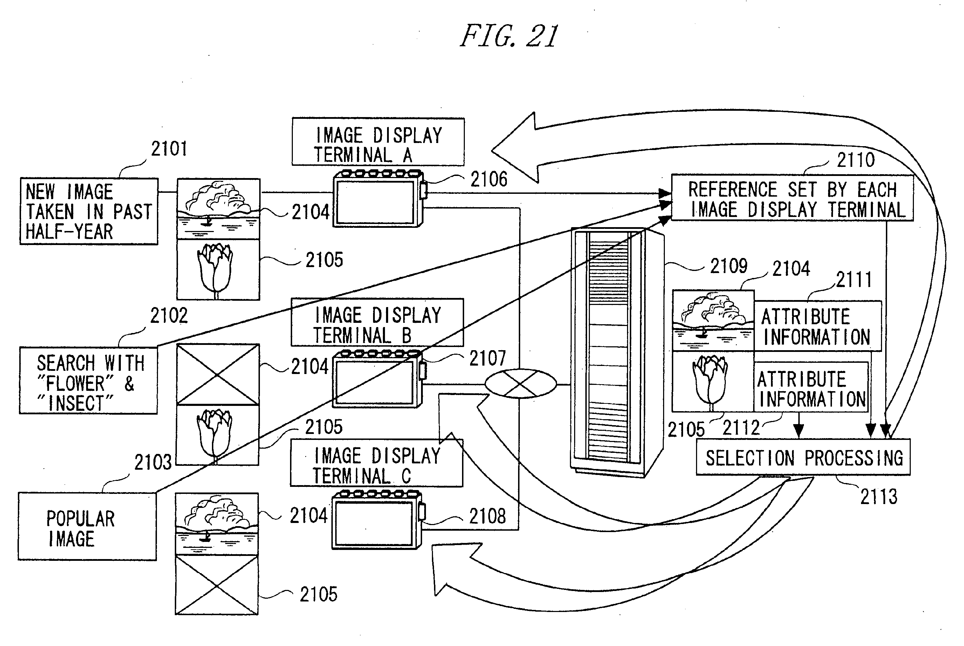

An operation in the case where an image server decides whether an image file is to be downloaded into an image display terminal based on a result of comparison between image attribute information and a reference in this second embodiment of the image management method according to the present invention will be described with reference to FIGS. 21 to 24.

Also, the overall outline of a system, to which this embodiment is applied, is the same as in the case described above with reference to FIG. 1 and therefore the description thereof will be omitted.

Further, the internal constructions of the image display terminal and the image server used in this embodiment are the same as those described above with reference to FIG. 2 in the first embodiment, so the description thereof will be omitted.

Still further, calculation method for the totaled result, which is used in this embodiment is the same as the calculation method for the totaled result described above with reference to FIGS. 12 to 18 in the first embodiment of the image management method according to the present invention, so the detailed description thereof will be omitted.

Still further, shared information recorded in the image server in this embodiment is the same as the shared information described above with reference to FIGS. 3 and 4 in the first embodiment of the image management method according to the present invention, so the detailed description thereof will be omitted.

FIG. 21 is a schematic system diagram which is used to explain the operation in the case where the image file of the image satisfying the reference is transmitted from the image server to the image display terminal in the second embodiment of the image management method according to the present invention.

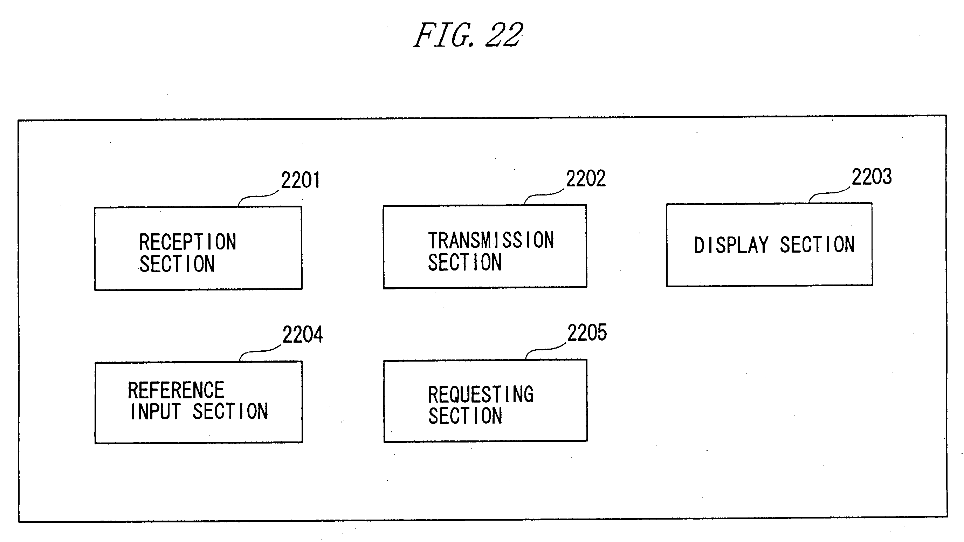

Also, FIG. 22 is a block diagram of the image display terminal which is used in the case where the image file of the image satisfying the reference is transmitted from the image server to the image display terminal in the second embodiment of the image management method according to the present invention.

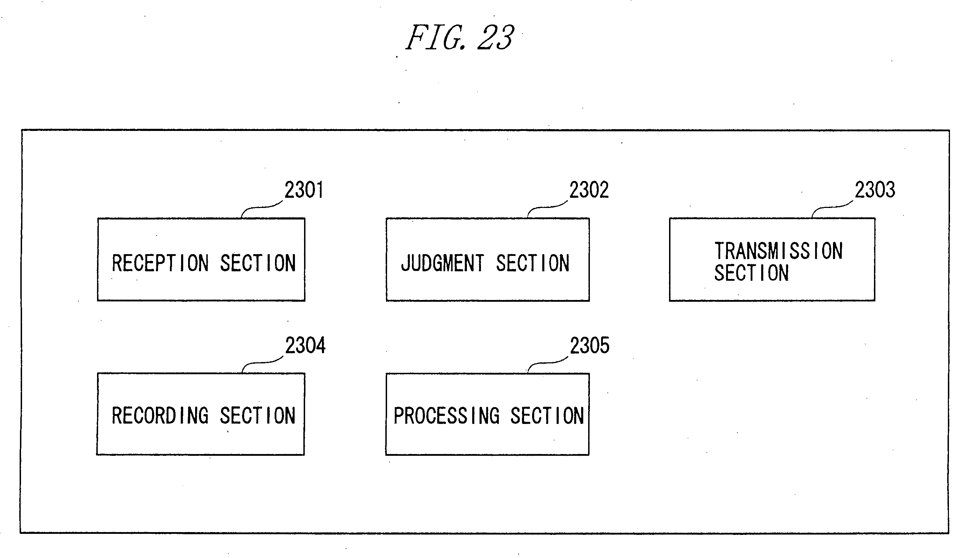

Also, FIG. 23 is a block diagram of the image server which is used in the case where the image file of the image satisfying the reference is transmitted from the image server to the image display terminal in the second embodiment of the image management method according to the present invention.

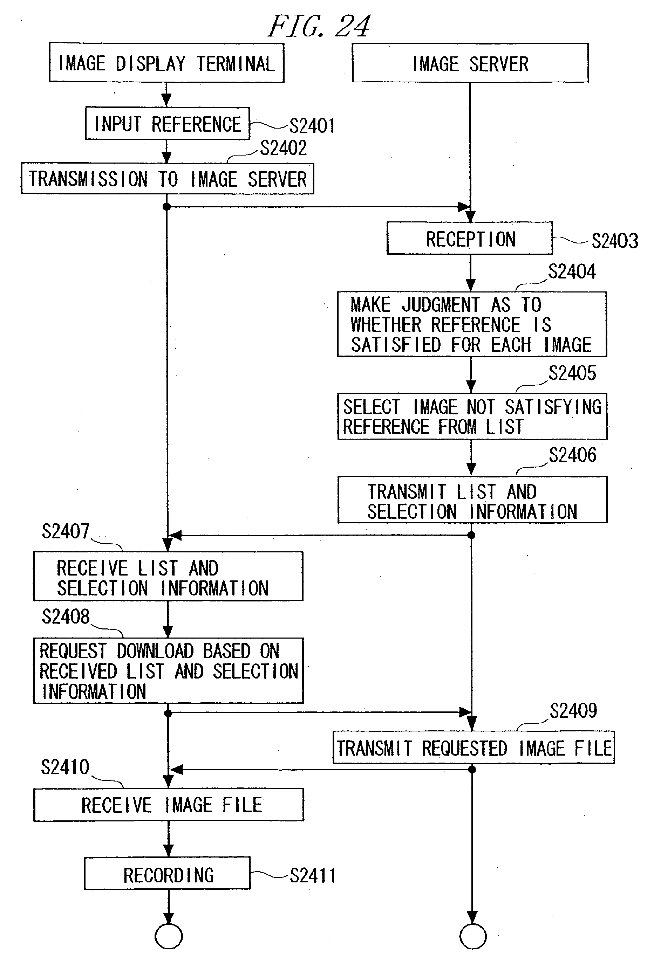

Also, FIG. 24 is a flowchart of the operation in the case where the image file of the image satisfying the reference is transmitted from the image server to the image display terminal in the second embodiment of the image management method according to the present invention.

As shown in FIG. 21, an image display terminal A 2106, an image display terminal B 2107, and an image display terminal C 2108 are connected to an image server 2109 through a network. As an example of the image display terminals, it is possible to cite an electronic photo frame.

The image display terminal A 2106, the image display terminal B 2107, and the image display terminal C 2108 are each a terminal that inputs an image to be transmitted to the image server 2109. Also, the image display terminal A 2106, the image display terminal B 2107, and the image display terminal C 2108 are each a terminal that displays an image transmitted from the image server 2109.

The image server 2109 records image files and attribute information. Also, various kinds of information recorded in the image server 2109 are sharable among multiple image display terminals and other devices. The information recorded in the image server 2109 and shared among these multiple image display terminals and other devices will be referred to as the shared information.

The image display terminal A 2106 sets a reference designating each new image taken in the past half-year as a set reference 2101 and transmits this reference to the image server 2109.

The image display terminal B 2107 sets a reference designating a search whose keywords are "flower" and "insect" , as a set reference 2102 and transmits this reference to the image server 2109.

The image display terminal C 2108 sets a reference designating each popular image as a set reference and transmits this reference to the image server 2109.

The image server 2109 refers to attribute information 2111 and 2112 set for an image 2104 and an image 2105 and compares the attribute information 2111 and 2112 with the reference 2110 set by each image display terminal.

Then, the image server 2109 performs processing 2113 in which it judges whether the attribute information of each image satisfies the reference 2110 set by each image display terminal and selects each image to be transmitted to each image display terminal.

As a result, in the example shown in FIG. 21, into the image display terminal A 2106, the image file of the image 2104 and image 2105 is downloaded.

Further, in the example shown in FIG. 21, into the image display terminal B 2107, only the image file of the image 2105 is downloaded and the image file of the image 2104 is not downloaded.

Further, in the example shown in FIG. 21, into the image display terminal C 2108, only the image file of the image 2104 is downloaded and the image file of the image 2105 is not downloaded.

Next, functions of the image display terminal at the time when an operation in the case where an image file is downloaded into the image display terminal based on a result of the comparison between the image attribute information and the reference at the image server is performed in the second embodiment of the image management method according to the present invention will be described with reference to FIG. 22.

As shown in FIG. 22, the image display terminal includes a reception section 2201, a transmission section 2202, a display section 2203, a reference input section 2204, and a request section 2205.

The reception section 2201 receives a list of images that should be downloaded and selection information and image files of images selected as not satisfying the reference transmitted from the image server.

The transmission section 2202 transmits a reference inputted at the reference input section 2204 to the image server 2109.

The display section 2203 displays images.

The reference input section 2204 inputs a reference for images required by the user.

The request section 2205 issues an image file download request to the image server based on the list and image selection information received from the image server.

The function of each section described above is realized through cooperation between the CPU of the image display terminal and a program recorded in a memory or the like or another member.

Next, functions of the image server at the time when the image server compares the image attribute information and the reference and decides whether an image file is to be downloaded into the image display terminal in the second embodiment of the image management method according to the present invention will be described with reference to FIG. 23.

As shown in FIG. 23, the image server includes a reception section 2301, a judgment section 2302, a transmission section 2303, a recording section 2304, and a processing section 2305.

The reception section 2301 receives a reference transmitted from the image display terminal.

The judgment section 2302 compares the reference transmitted from the image display terminal and the attribute information as to each image recorded in the recording section 2305 with each other. Then, the judgment section 2302 judges whether the attribute information as to each image satisfies the reference transmitted from the image display terminal.

The transmission section 2303 downloads a list of images, image selection information, and image files into the image display terminal in accordance with an instruction from the processing section 2305.

The recording section 2304 records the reference and image files received from the image display terminal.

The processing section 2305 selects each image that does not satisfy the reference from the list based on a result of the judgment of the judgment section 2302 and generates image selection information. This image selection information is information indicating which image satisfies the reference and which image does not satisfy the reference.

The function of each section described above is realized through cooperation between the CPU of the image server and a program recorded in a memory or the like or another member.

Next, an operation in the case where the image server compares image attribute information and a reference with each other and decides whether an image file is to be downloaded into the image display terminal in the second embodiment of the image management method according to the present invention will be described with reference to a flowchart shown in FIG. 24.

First, in S2401, a reference for selecting each image to be downloaded is inputted into the image display terminal.

Next, the image display terminal transmits the inputted reference to the image server (S2402).

Next, the image server receives the reference transmitted from the image display terminal (S2403).

Next, the image server judges whether each image satisfies the received reference based on the attribute information as to the image (S2404).

This judgment in S2404 as to whether the reference is satisfied by the attribute information will be described. When the reference is a reference designating each new image taken in the past half-year, for instance, the image server uses the value of the data creation/update/final reference date and time that are the contents of the image management information 402 shown in FIG. 4 as the attribute information, for instance.

That is, the image server compares the current date and time with the data creation/update/final reference date and time that are the contents of the image management information 402 shown in FIG. 4 and judges whether a difference therebetween is less than a half year.

Also, when the reference is a reference designating a search whose keywords are "flower" and "insect", for instance, the image server uses the value of the search keyword that is the content of the image management information 402 shown in FIG. 4 as the attribute information, for instance.

That is, the image server confirms the contents of the search keyword that are the contents of the image management information 402 and judges whether the keyword "flower" or "insect" is contained in the contents.

Further, when the reference is a reference designating each popular image, for instance, the image server uses any one or a combination of the non-display number or the non-display ratio, the number of "Favorite" registration or the "Favorite" registration ratio, the search hit number or the search hit ratio, and the copy number or the copy ratio that are the contents of the totaled result 404 shown in FIG. 4 as the attribute information, for instance.

That is, the image server confirms the value of any one or a combination of the non-display number or the non-display ratio, the number of "Favorite" registration or the "Favorite" registration ratio, the search hit number or the search hit ratio, and the copy number or the copy ratio that are the contents of the totaled result 404 and judges whether the value is equal to more than a predetermined value.

It should be notedhere that in the present invention, a relation between the set reference and the used attribute information is not limited to the examples described above and it is possible to consider various other relations.

Next, when there exist any images not satisfying the reference, the image server selects the images from a list for performing image file sharing synchronization processing in order to inform the image display terminal of which images are the images not satisfying the reference (S2405).

Next, the image server transmits the list generated in S2405 for performing the image file sharing synchronization processing and the information as to each image selected in S2404 to the image display terminal (S2406).

Next, the image display terminal receives the list and the selection information from the image server (S2407).

Then, the image display terminal issues an image file download request to the image server based on these list and selection information (S2408). Here, each image, for which the image display terminal issues the image file download request to the image server, is an image obtained by excluding each image selected as not satisfying the reference from the list.

Then, the image server downloads each image file requested by the image display terminal into the image display terminal (S2409).

Then, the image display terminal receives and records the image file downloaded from the image server (S2410, S2411).

As described above, in the second embodiment of the image management method according to the present invention, it is decided whether an image file is to be downloaded into the image display terminal by comparing a reference and attribute information with each other, so it becomes possible to download each image file desired by a user.

Here, in the second embodiment of the image management method according to the present invention described above, a case where a reference used at the image server is transmitted from the image display terminal to the image server has been described as an example.

However, the image management method according to the present invention is not limited to such a case. For instance, as to the reference used at the image server, the image server may include a reference input section, generate a reference for each image display terminal, and use the generated reference.

Even in such a case, it is possible to provide the same effects as in the second embodiment of the image management method according to the present invention described above.

Also, in the second embodiment of the image management method according to the present invention described above, the image display terminal requests each image file that is to be received based on a list and selection information, although the present invention is not limited to such a case. For instance, the image server may exclude each image not satisfying a reference from a list as an image that is not to be transmitted to the image display terminal.

Even in such a case, it is possible to provide the same effects as in the second embodiment of the image management method according to the present invention described above.

(Third Embodiment of Image Management Method)

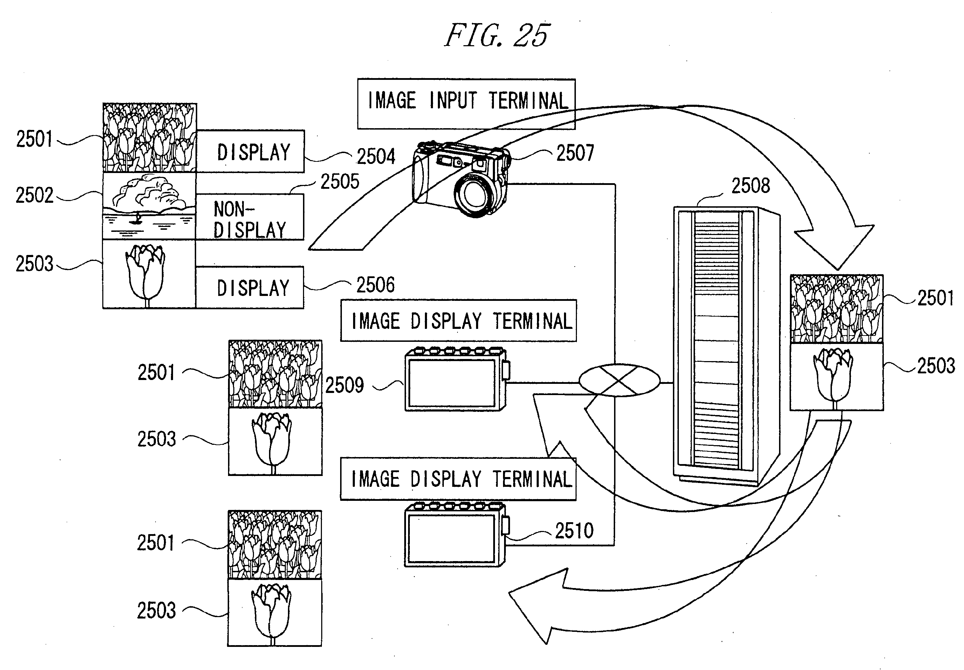

Next, a third embodiment of the image management method according to the present invention will be described with reference to FIGS. 25 to 27.

The third embodiment of the image management method according to the present invention is an embodiment in which only the image file of each image, for which display attribute information has been set, is transmitted from an image display terminal or an image input terminal to an image server.

Note that, the overall outline of this embodiment is the same as that described above with reference to FIG. 1 and therefore the description thereof will be omitted.

Further, the internal constructions of the image display terminal, image input terminal and the image server used in this embodiment are the same as those described above with reference to FIG. 2 in the first embodiment, so the description thereof will be omitted.

Still further, shared information recorded in the image server in this embodiment is the same as the shared information described above with reference to FIGS. 3 and 4 in the first embodiment of the image management method according to the present invention, so the detailed description thereof will be omitted.

Also, in the following description, processing in the case where an image file is transmitted from an image input terminal to an image server will be explained. However, the following description also holds true in a like manner for a description in the case where image attribute information is set at an image display terminal and an image file is transmitted to an image server.

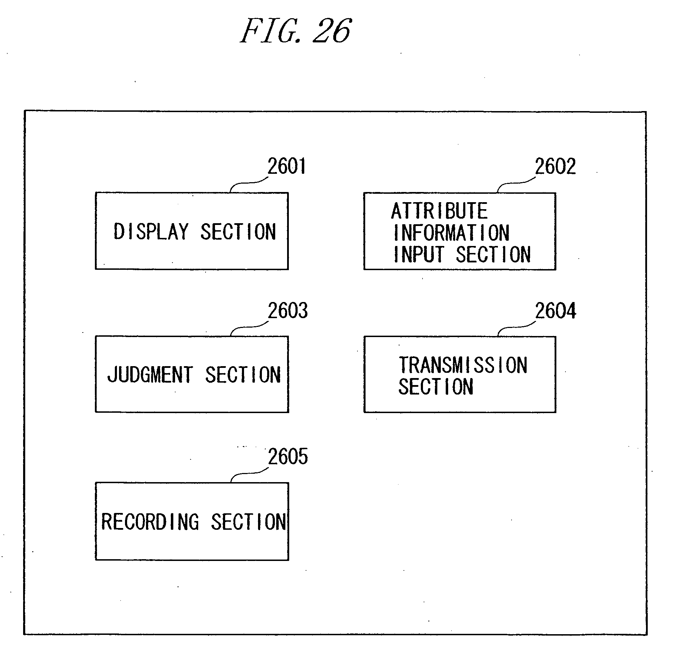

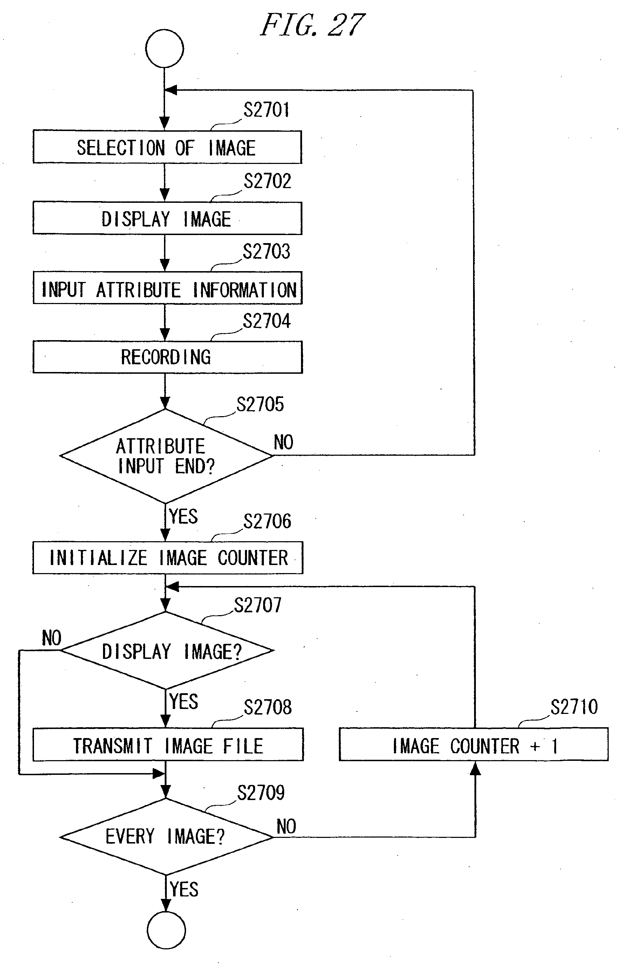

FIG. 25 is a schematic system diagram used to explain an operation in the case where only each image file, for which display attribute information has been set, is transmitted from the image input terminal to the image server in the third embodiment of the image management method according to the present invention. FIG. 26 is a block diagram of the image input terminal used in the case where only each image file, for which display attribute information has been set, is transmitted from the image input terminal to the image server in the third embodiment of the image management method according to the present invention. FIG. 27 is a flowchart of the operation in the case where only each image, for which display attribute information has been set, is transmitted from the image input terminal to the image server in the third embodiment of the image management method according to the present invention.

An image input terminal 2507, an image display terminal 2509, and an image display terminal 2510 are connected to an image server 2508 through a network.

The image input terminal 2507 is a terminal for inputting an image to be transmitted to the image server 2508. This image input terminal 2507 performs an image input operation and is not specifically required to perform an image display operation. As an example of this image input terminal, it is possible to cite a digital camera.

The image display terminals 2509 and 2510 are each a terminal that inputs an image to be transmitted to the image server 2508. Also, the image display terminals 2509 and 2510 are each a terminal that displays an image transmitted from the image server 2508. As an example of the image display terminals, it is possible to cite an electronic photo frame.

The image server 2508 records image files and attribute information. Also, various kinds of information recorded in the image server 2508 are sharable among multiple image display terminals and other devices.

Also, the image input terminal 2507 sets display attribute information 2504 for an image 2501; sets non-display attribute information 2505 for an image 2502, and sets display attribute information 2506 for an image 2503.

Here, the description of setting of the attribute information and recording thereof into the image input terminal in this embodiment is the same as the above-mentioned description in the case where the attribute information is set and recorded into the image display terminal made with reference to FIGS. 9, 10, and 11 and therefore will be omitted.

The image input terminal 2507 transmits each image to the image server 2508. However, the image input terminal 2507 does not transmit (upload) the image file of the image 2502, for which the non-display attribute information has been set, to the image server 2508.

Accordingly, in the image server 2508, the image file of the image 2501 and the image file of the image 2503 are recorded.

Accordingly, into the image display terminal 2509 and the image display terminal 2510, only the image files of the image 2501 and image 2503 are to be downloaded from the image server 2508 and the image file of the image 2502 is never to be downloaded therefrom.

Next, internal functions of the image input terminal 2507 shown in FIG. 25 will be described with reference to FIG. 26. However, the description of the internal functions of the image input terminal to be made with reference to FIG. 26 also holds true in a like manner for the description of the internal functions of the image display terminal in the case where an image file is transmitted from the image display terminal to the image server.

As shown in FIG. 26, the image input terminal 2507 shown in FIG. 25 includes a display section 2601, an attribute information input section 2602, a judgment section 2603, a transmission section 2604, and a recording section 2605.

The display section 2601 displays images.

The attribute information input section 2602 is a function for inputting attribute information as to images. In the case of the embodiment shown in FIG. 25, as the attribute information, image display or non-display attribute information is inputted into the image input terminal.

The judgment section 2603 judges whether a predetermined image file is to be transmitted to the image server based on attribute information.

The transmission section 2604 transmits the image file to the image server based on a result of the judgment by the judgment section 2603.

The recording section 2605 records image files and inputted attribute information.

The function of each section described above is realized through cooperation between the CPU of the image input terminal and a program recorded in a memory or the like or another member.

Next, an operation in the third embodiment of the image management method according to the present invention will be described with reference to FIG. 27.

First, the image input terminal prompts a user to select an image to be displayed (S2701).

Next, the image input terminal displays the image and prompts the user to input display or non-display attribute information for this image (S2702, S2703).

Next, the image input terminal records the inputted attribute information (S2704).

Next, the image input terminal judges whether the attribute input is ended (S2705). Following this, when the attribute input is not yet ended (No), the processing proceeds to S2701. When the attribute input is ended (Yes), the processing proceeds to S2706.

Next, the image input terminal initializes an image counter (S2706).

Next, at the time of transmission of an image file to the image server, the image input terminal judges whether the attribute information as to each image is display attribute information (S2707).

When the attribute information as to the image is display attribute information (Yes), the processing proceeds to S2708. When the attribute information as to the image is non-display attribute information, the processing proceeds to S2709.

In S2708, the image input terminal transmits an image file, for which display attribute information has been set, to the image server. Then, the processing proceeds to S2709.

In S2709, the image input terminal judges whether the transmission processing is ended for every image. Following this, when the transmission processing is not yet ended for every image (No), the processing proceeds to S2710 in which the image counter is incremented by one. Then, the processing proceeds to S2707.

When the transmission processing is ended for every image, the image input terminal ends the operation.

As described above, in this embodiment, only each image file, for which a user has inputted display attribute information, is transmitted from the image input terminal to the image server, which prevents a situation in which unnecessary image files are transmitted to the image server. As a result, it becomes possible to perform image file management at the image server in accordance with a desire of the user.

(Fourth Embodiment of Image Management Method)

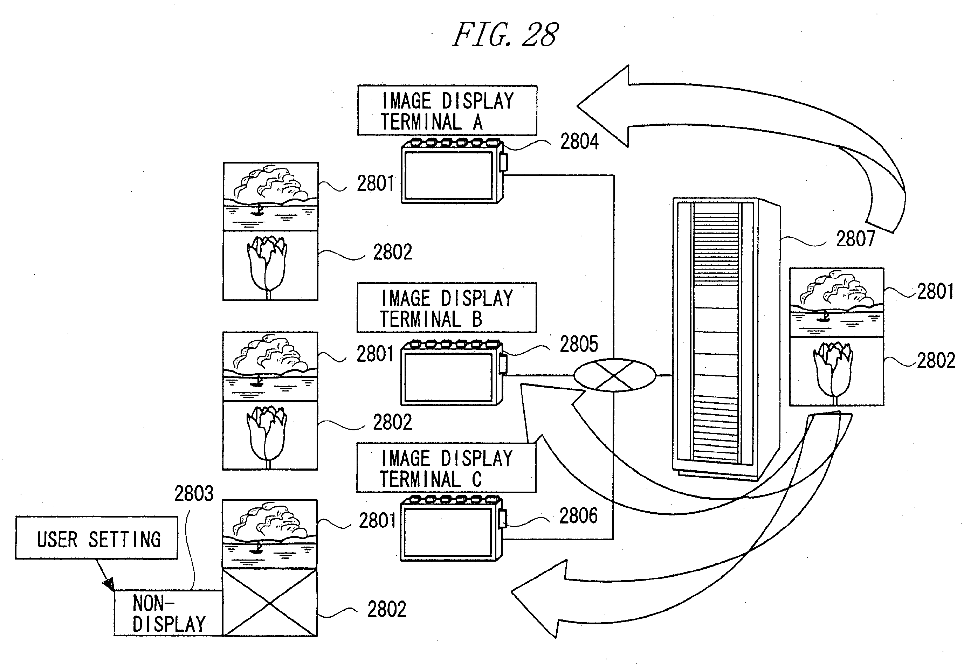

Next, a fourth embodiment of the image management method according to the present invention will be described with reference to FIGS. 28 to 30.

The fourth embodiment of the image management method according to the present invention is an embodiment in which each image, for which non-display attribute information has been set in advance at an image display terminal, will not be displayed even when its image file has been downloaded from an image server.

Note that, the overall outline of this embodiment is the same as in the case described above with reference to FIG. 1 and therefore the description thereof will be omitted.

Note that, the internal constructions of the image display terminal and the image server used in this embodiment are the same as those described above with reference to FIG. 2 in the first embodiment, so the description thereof will be omitted.

Also, shared information recorded in the image server in this embodiment is the same as the shared information described above with reference to FIGS. 3 and 4 in the first embodiment of the image management method according to the present invention, so the detailed description thereof will be omitted.

FIG. 28 is a schematic system diagram used to explain an operation in the case where each image, for which non-display attribute information has been set in advance at the image display terminal, will not be displayed even when it has been downloaded from the image server in the fourth embodiment of the image management method according to the present invention.

As shown in FIG. 28, in this embodiment, an image display terminal A 2804, an image display terminal B 2805, and an image display terminal C 2806 are connected to an image server 2807 through a network.

The image display terminal A 2804, the image display terminal B 2805, and the image display terminal C 2806 are each a terminal for inputting an image to be transmitted to the image server 2807.

Also, the image display terminal A 2804, the image display terminal B 2805, and the image display terminal C 2806 are each a terminal that displays an image transmitted from the image server 2807. As an example of these image display terminals, it is possible to cite an electronic photo frame.

In the example shown in FIG. 28, only the user of the image display terminal C 2806 sets non-display attribute information 2803 for an image 2802 in advance.

On the other hand, none of the users of the image display terminal A 2804, the image display terminal B 2805, and the image display terminal C 2806 have set non-display attribute information for an image 2801.

Here, the description of setting of attribute information and recording thereof into recording sections of the image display terminals in this embodiment is the same as the above description made with reference to FIGS. 9, 10, and 11 and therefore will be omitted.

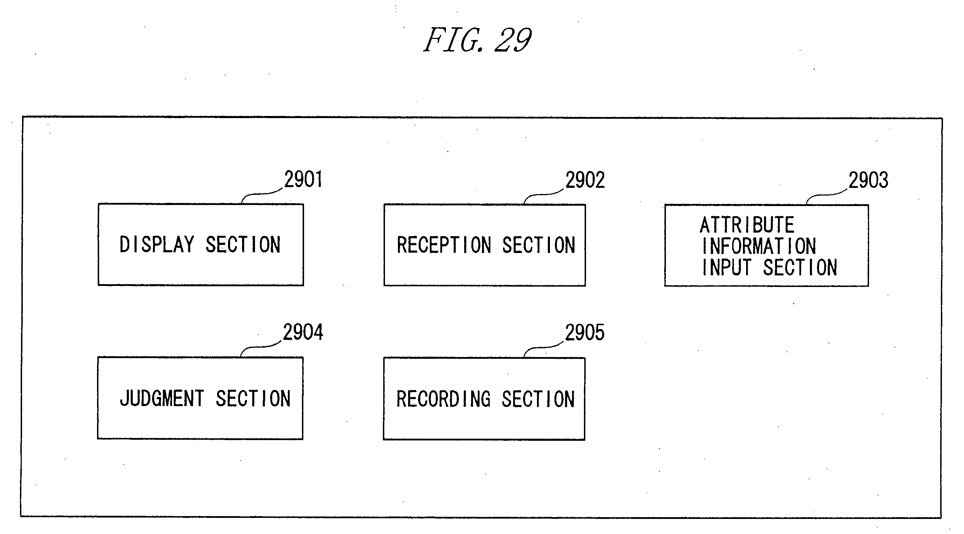

Next, functions of the image display terminals shown in FIG. 28 will be described with reference to FIG. 29. FIG. 29 is a block diagram of the image display terminal used to explain an operation in the case where each image, for which non-display attribute information has been set at the image display terminal, will not be displayed even when it has been downloaded from the image server in the fourth embodiment of the image management method according to the present invention.

As shown in FIG. 29, the image display terminal shown in FIG. 28 includes a display section 2901, a reception section 2902, an attribute information input section 2903, a judgment section 2904, and a recording section 2905.

The display section 2901 displays the image of an image file downloaded from the image server according to a result of a judgment of the judgment section 2904. For instance, when the judgment section 2904 has judged that a certain image file is the image file of an image for which display attribute information has been set, the display section 2901 displays the image of the image file.

The reception section 2902 receives image files from the image server.

The attribute information input section 2903 is a function with which the user inputs attribute information for each image in advance. In this embodiment, for each image, display or non-display attribute information is inputted into the image display terminal.

Also, in this embodiment, the inputting of the attribute information into the image display terminal in advance means inputting thereof into the image display terminal before downloading of an image file from the image server.

The judgment section 2904 judges whether an image is to be displayed by the display section 2901 based on attribute information inputted at the attribute information input section 2903.

The recording section 2905 records image files downloaded from the image server and attribute information inputted at the attribute information input section 2903.

The function of each section described above is realized through cooperation between the CPU of the image display terminal and a program recorded in a memory or the like or another member.

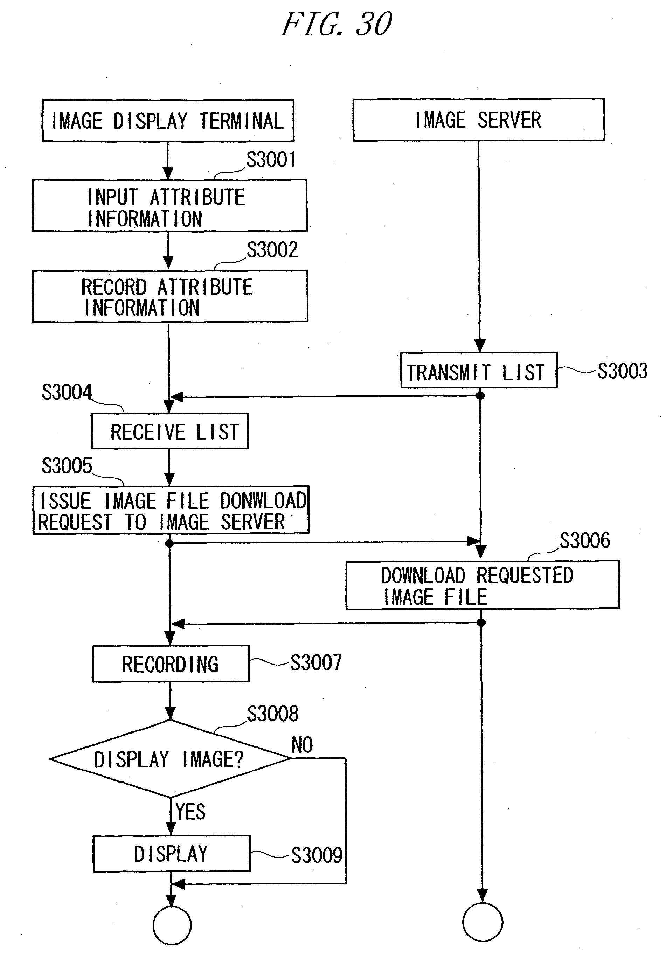

Next, an operation of the fourth embodiment of the image management method according to the present invention will be described with reference to FIG. 30. FIG. 30 is a flowchart of the operation in the case where each image, for which non-display attribute information has been set in advance at the image display terminal, will not be displayed even when the image file has been downloaded from the image server in the fourth embodiment of the image management method according to the present invention.

As shown in FIG. 30, in S3001, into the image display terminal, attribute information is inputted for each image. In this embodiment, this attribute information is display or non-display attribute information.

Next, the image display terminal records the inputted attribute information (S3002).

Next, the image display terminal performs image file sharing synchronization processing with the image server, thereby establishing image file synchronization (S3003 to S3007).

That is, in a predetermined case, the image server transmits a list of images that should be shared by the image display terminal to the image display terminal (S3003). Here, this predetermined case may be a case where a predetermined time has reached, for instance. Also, aside from this, the predetermined case may be a case where a predetermined event has occurred.

Next, the image display terminal receives the list "(S3004) and issues a download request to the image server for each image file that is on the list but is not recorded in itself based on the list (S3005).

On receiving this request, the image server downloads each requested image file into the image display terminal (S3006).

It should be noted here that in the description of this embodiment, for ease of explanation, only a case where an image file is downloaded from the image server into the image display terminal is explained as an example. However, even in this embodiment, in the image file sharing synchronization processing, an image file may be transmitted from the image display terminal to the image server.

Then, on receiving the image file from the image server, the image display terminal records the received image file in the recording section (S3007).

Next, when receiving an image display request, the image display terminal judges whether the attribute information as to the image to be displayed is display attribute information or non-display attribute information (S3008).

Following this, when the attribute information as to the image to be displayed is display attribute information (Yes), the processing proceeds to S3009 in which display processing is performed for this image. When the attribute information as to the image to be displayed is non-display attribute information (No), the operation is ended.

As described above, in the fourth embodiment of the image management method according to the present invention, each image, for which non-display attribute information has been set in advance at the image display terminal, will not be displayed even when the image file has been transmitted from the image server. As a result, it becomes possible to perform image displaying at the image display terminal in accordance with a desire of the user.

(Fifth Embodiment of Image Management Method)

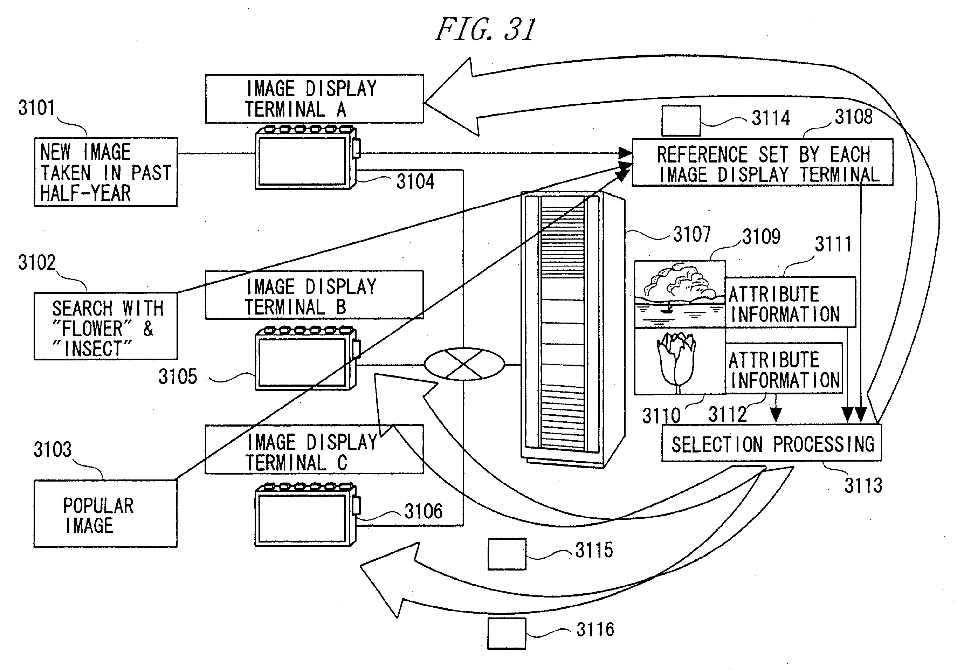

Next, a fifth embodiment of the image management method according to the present invention will be described with reference to FIGS. 31 to 34.

The fifth embodiment of the image management method according to the present invention is an embodiment in which attribute information of each image, whose attribute information satisfies a reference, is transmitted from an image server to an image display terminal.

It should be noted here that the reference in this embodiment is the same as the reference in the first embodiment described above.

Also, the overall outline of a system, to which this embodiment is applied, is the same as in the case described above with reference to FIG. 1 and therefore the description thereof will be omitted.

Further, the internal constructions of the image display terminal and the image server used in this embodiment are the same as those described above with reference to FIG. 2 in the first embodiment, so the description thereof will be omitted.

Still further, shared information recorded in the image server in this embodiment is the same as the shared information described above with reference to FIGS. 3 and 4 in the first embodiment of the image management method according to the present invention, so the detailed description thereof will be omitted.

FIG. 31 is a schematic system diagram used to explain an operation in the case where attribute information as to each image, whose attribute information satisfies a reference, is transmitted from the image server to the image display terminal in the fifth embodiment of the image management method according to the present invention.

As shown in FIG. 31, an image display terminal A 3104, an image display terminal B 3105, and an image display terminal C 3106 are connected to an image server 3107 through a network.

The image display terminal A 3104, the image display terminal B 3105, and the image display terminal C 3106 are each a terminal that inputs an image to be transmitted to the image server 3107. Also, the image display terminal A 3104, the image display terminal B 3105, and the image display terminal C 3106 are each a terminal that displays an image transmitted from the image server 3107. As an example of these image display terminals, it is possible to cite an electronic photo frame.

For instance, the image display terminal A 3104 sets a reference designating each new image taken in the past half-year as a set reference 3101 and transmits this reference to the image server 3107.

For instance, the image display terminal B 3105 sets a reference designating a search whose keywords are "flower" and "insect" as a set reference 3101 and transmits this reference to the image server 3107.

For instance, the image display terminal C 3106 sets a reference designating each popular image as a set reference 3103 and transmits this reference to the image server 3107.

The image server 3107 refers to attribute information 3111 and 3112 set for an image 3109 and an image 3110 and compares it with the reference 3108 set by each image display terminal.

Then, the image server 3107 performs processing 3113 in which it judges whether the attribute information as to each image corresponds to the reference 3108 set by each image display terminal and selects attribute information to be transmitted to each image display terminal.

As a result, when there exists attribute information that should be transmitted to the image display terminal A 3104, it is transmitted as attribute information 3114.

Further, when there exists attribute information that should be transmitted to the image display terminal B 3105, it is transmitted as attribute information 3115.

Further, when there exists attribute information that should be transmitted to the image display terminal C 3106 , it is transmitted as attribute information 3116.

Here, in the present invention, the attribute information transmitted from the image server to the image display terminals is not specifically limited.

That is, as the attribute information transmitted to each image display terminal, for instance, the whole of the attribute information shown in FIG. 4 may be transmitted or a part of the attribute information shown in FIG. 4 that indicates an image name, a search keyword, a display/non-display attribute information or the like may be transmitted.

For instance, when an image storage destination is transmitted from the image server to the image display terminal as attribute information, it is possible for the image display terminal to download an image from the image storage destination by itself. In this case, there occurs no problem even when the image to be downloaded does not exist on the server and it is sufficient that the image exists on a network that is accessible by the terminal. In this case, the attribute information indicates a place on the network.

For instance, when an image name is transmitted as the attribute information from the image server to the image display terminal, it becomes possible for the user of the image display terminal to use the image name set at the image server, without deciding the image name of the image file by himself/herself.

For instance, when a search keyword is transmitted as the attribute information from the image server to the image display terminal, it becomes possible for the user of the image display terminal to use the search keyword set at the image server, without deciding the search keyword of the image file by himself/herself.

For instance, when a non-display attribute is transmitted as the attribute information from the image server to the image display terminal, it becomes possible for the user of the image display terminal to use the non-display attribute set at the image server, without deciding the non-display attribute of the image file by himself/herself.

It should be noted here that the attribute information set at the image server and transmitted from the image server to the image display terminal in the above description is attribute information set by the largest number of users, for instance.

Alternatively, the attribute information set at the image server and transmitted from the image server to the image display terminal in the above description may be the user attributes of the user of the image display terminal to which the attribute information is transmitted.

Alternatively, the attribute information set at the image server and transmitted from the image server to the image display terminal in the above description may be the user attributes of any user.

Needless to say, it is also possible to use another setting as the attribute information set at the image server.

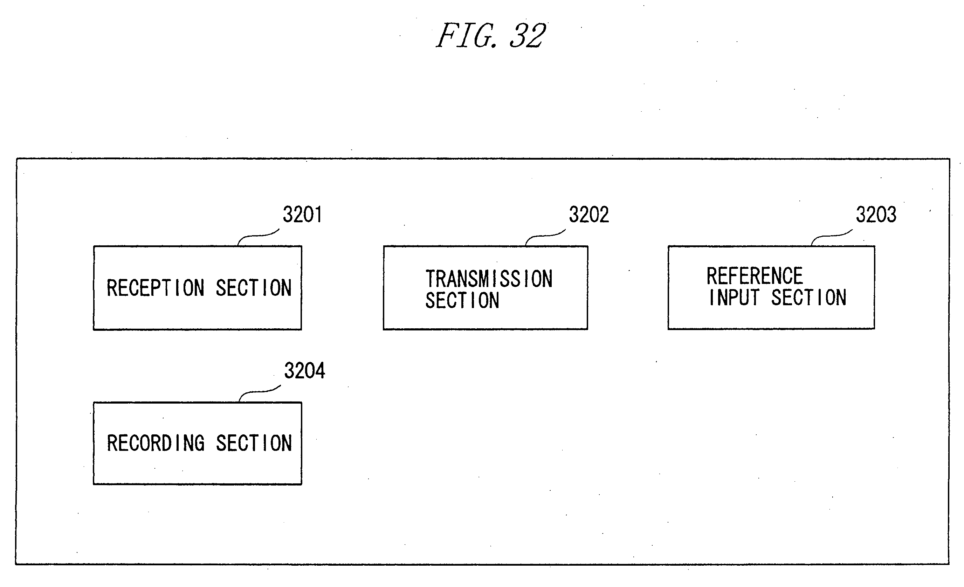

Next, functions of the image display terminal used in the fifth embodiment of the image management method according to the present invention will be described with reference to FIG. 32. FIG. 32 is a block diagram of the image display terminal used in the case where attribute information as to each image, whose attribute information satisfies a reference, is transmitted from the image server to the image display terminal in the fifth embodiment of the image management method according to the present invention.

As shown in FIG. 32, the image display terminal includes a reception section 3201, a transmission section 3202, a reference input section 3203, and a recording section 3204.

The reception section 3201 receives attribute information from the image server.

The transmission section 3202 transmits a reference to the image server.

Into the reference input section 3203, the reference to be transmitted to the image server is inputted.

The recording section 3204 records the reference inputted into the reference input section 3203 and the attribute information received by the reception section 3201.

The function of each section described above is realized through cooperation between the CPU of the image display terminal and a program recorded in a memory or the like or another member.

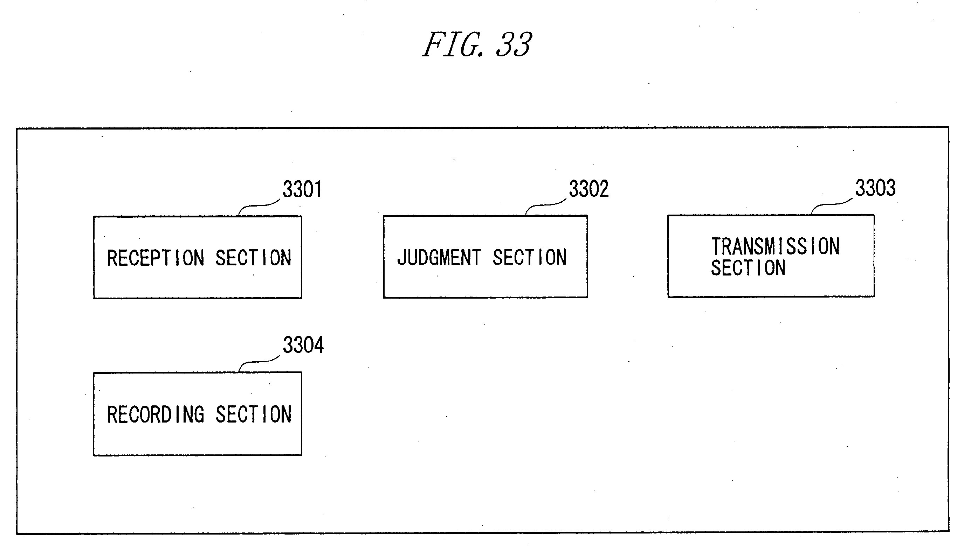

Next, functions of the image server shown in FIG. 31 will be described with reference to FIG. 33. FIG. 33 is a block diagram of the image server used in the case where attribute information as to each image, whose attribute information satisfies a reference, is transmitted from the image server to the image display terminal in the fifth embodiment of the image management method according to the present invention.

As shown in FIG. 33, the image server includes a reception section 3301, a judgment section 3302, a transmission input section 3303, and a recording section 3304.

The reception section 3301 receives a reference transmitted from the image display terminal.

The judgment section 3302 judges whether attribute information recorded in the recording section 3304 satisfies the reference.

Also, the judgment section 3302 judges whether the attribute information is to be transmitted to the image display terminal according to a result of this judgment.

Further, the judgment section 3302 also judges which attribute information among the attribute information recorded in the recording section 3304 is to be transmitted to the image display terminal based on a setting. For instance, this setting may be transmitted from the image display terminal or may be set through inputting by an image server setting person into the image server.

Here, the attribute information recorded in the recording section 3304 is the same as the attribute information described above with reference to FIGS. 3 and 4 in the first embodiment. Therefore, a method of acquiring or generating the attribute information recorded in the recording section 3304 is the same as the attribute information acquiring or generating method described above in the first embodiment.

Also, a totaled result calculating method used in this embodiment is the same as the totaled result calculating method described above with reference to FIGS. 12 to 18 in the first embodiment of the image management method according to the present invention, so the detailed description thereof will be omitted.

The transmission section 3303 transmits the image attribute information recorded in the recording section 3304 to the image display terminal based on a result of the judgment of the judgment section 3302.

The recording section 3304 records the image attribute information and reference transmitted from the image display terminal.

The function of each section described above is realized through cooperation between the CPU of the image server and a program recorded in a memory or the like or another member.

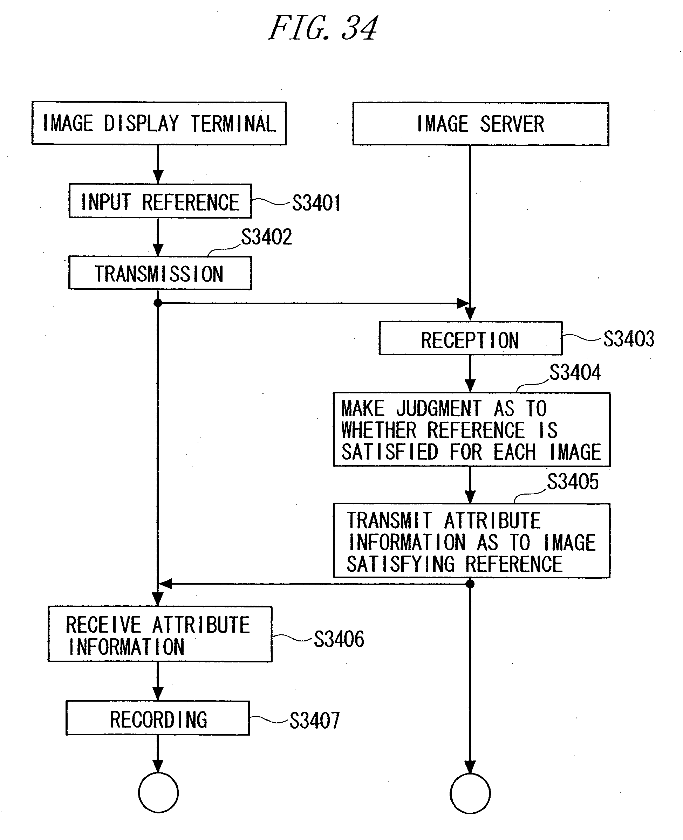

Next, an operation of the fifth embodiment of the image management method according to the present invention will be described with reference to FIG. 34. FIG. 34 is a flowchart of the operation in the case where attribute information as to each image, whose attribute information satisfies a reference, is transmitted from the image server to the image display terminal in the fifth embodiment of the image management method according to the present invention.

First, in the image display terminal, a reference is inputted (S3401).

The image display terminal transmits the inputted reference to the image server (S3402).

Next, the image server receives the reference transmitted from the image display terminal (S3403).

Next, the image server judges whether attribute information as to each image satisfies the reference transmitted form the image display terminal (S3404).

This judgment in S3404 as to whether the attribute information as to each image satisfies the reference is the same as the judgment in S2404 in FIG. 24 in the first embodiment described above, so the detailed description thereof will be omitted.

Next, the image server transmits the attribute information as to each image satisfying the reference to the image display terminal (S3405). Here, it is assumed that which attribute information is to be transmitted to the image display terminal is set at the image server in advance. However, the attribute information to be transmitted to the image display terminal may be determined in accordance with a request from the image display terminal.

Next, the image display terminal receives the attribute information transmitted from the image server and records it in the recording section (S3406, S3407).

As described above, in the fifth embodiment of the image management method according to the present invention, only attribute information as to each image, whose attribute information satisfies a reference, is transmitted from the image server to the image display terminal, so it becomes possible to bring the attribute information as to each image corresponding to the desire of the user recorded at the image display terminal into coincidence with the attribute information set at the image server.

For instance, in this embodiment, it is possible to transmit an image name that is attribute information as to each image satisfying a reference designating each new image taken in the past half-year from the image server to the image display terminal.

Also, by combining this embodiment with the first embodiment and the fourth embodiment described above, it becomes possible to perform the image display at the image display terminal in a manner more suited for the desire of the user.

That is, it is assumed that as described in the first embodiment, the attribute information recorded in the image server has been processed and display attribute information for a certain image of a certain user has changed to non-display attribute information, for instance.

Then, a copy number is set as a reference and when the copy number of the image, whose attribute has been changed, satisfies the reference, the changed attribute information is transmitted to the image display terminal and becomes the attribute information at the image display terminal.

As a result, as described in the fourth embodiment, even when the image file has been transmitted from the image server to the image display terminal, the image will not be displayed.

As described above, for instance, in this embodiment, it becomes possible to set the image attribute information desired by the user and recorded at the image display terminal to the attribute information set at the image server.

It should be noted here that in the fifth embodiment of the image management method according to the present invention described above, a case where the reference used at the image server is transmitted from the image display terminal to the image server has been described as an example.

However, the image management method according to the present invention is not limited to such a case. For instance, as to the reference used at the image server, the image server may include a reference input section, generate a reference for each image display terminal, and use the generated reference.

Even in such a case, it is possible to provide the same effects as in the fifth embodiment of the image management method according to the present invention described above.

Also, in the present invention, instead of the image files used in each embodiment described above, it is also possible to use another kind of files such as music files.

INDUSTRIAL APPLICABILITY

As described above, the image management method, the image server, the terminal, the image display terminal, the image management program, and the computer-readable recording medium recording the image management program according to the present invention are suitably applicable to a system, in which an image file is shared among multiple terminals, or a system in which a terminal that receives an image file from an image server and displays the received image file is further provided.

**Claims**

**1.** An image management method executed by an image server that records an image file, comprising:

a totaling step of totaling user attributes for each user of an image of the image file and outputting a totaled result;
a judgment step of judging whether the totaled result satisfies a predetermined reference; and
a processing step of processing at least one of the image file and the user attributes according to a result of

EP 1 632 857 A1

the judgment in the judgment step.

2. An image management method according to claim 1,
wherein the processing in the processing step comprises processing of the image file.

3. An image management method according to claim 1,
wherein the processing in the processing step comprises changing of the user attributes.

4. An image management method executed by an image server that records an image file, comprising:

a totaling step of totaling user attributes for each user of an image of the image file and outputting a totaled result;
a judgment step of judging whether attribute information containing image management information generated for the image, the user attributes, and the totaled result satisfies a predetermined reference; and
a transmission step of transmitting the image file to an image display apparatus, which displays the image, according to a result of the judgment in the judgment step.

5. An image management method executed by a apparatus that transmits an image file to an image server that records the image file, comprising:

an attribute information input step of inputting one of display attribute information and non-display attribute information for each image file to be transmitted;
a judgment step of judging whether the image file is to be transmitted to the image server based on the inputted attribute information; and
a transmission step of transmitting the image file to the image server according to a result of the judgment in the judgment step.

6. An image management method executed by an image display apparatus that displays an image, comprising:

an attribute information input step of inputting one of display attribute information and non-display attribute information for the image in advance;
a judgment step of judging whether an image file of the image is an image file of an image for which the display attribute information has been set, or an image file of an image for which the non-display attribute information has been set; and
a processing step of processing the image according to a result of the judgment in the judgment step.

7. An image management method executed by an image server that records an image file, comprising:

a totaling step of totaling user attributes for each user of an image of the image file and outputting a totaled result;
a judgment step of judging whether attribute information containing image management information generated for the image, the user attributes, and the totaled result satisfies a predetermined reference; and
a transmission step of transmitting at least a part of the attribute information to an image display apparatus, which displays the image, according to a result of the judgment in the judgment step.

8. An image server comprising:

a totaling means for totaling user attributes for each user of an image and outputting a totaled result;
a judgment means for judging whether the totaled result satisfies a predetermined reference; and
a processing means for processing at least one of the image file and the user attributes according to a result of the judgment by the judgment means.

9. An image server according to claim 8,
wherein the processing by the processing means comprises processing of the image file.

10. An image server according to claim 8,
wherein the processing by the processing means comprises changing of the user attributes.

11. An image server comprising:

a totaling means for totaling user attributes for each user of an image and outputting a totaled result;
a judgment means for judging whether attribute information containing image management information generated for the image, the user attributes, and the totaled result satisfies a predetermined reference; and
a transmission means for transmitting the image file to an image display apparatus, which displays the image, according to a result of the judgment by the judgment means.

12. A apparatus comprising:

an attribute information input means for inputting one of display attribute information and non-display attribute information for each image file to be transmitted to an image server that records an image file;
a judgment means for judging whether the image file is to be transmitted to the image server based on the inputted attribute information; and
a transmission means for transmitting the image file to the image server according to a result of the judgment by the judgment means.

13. An image display apparatus comprising:

an attribute information input means for inputting one of display attribute information and non-display attribute information for an image in advance;
a judgment means for judging whether an image file of the image is an image file of an image for which the display attribute information has been set, or an image file of an image for which the non-display attribute information has been set; and
a processing means for processing the image according to a result of the judgment by the judgment means.

14. An image server comprising:

a totaling means for totaling user attributes for each user of an image and outputting a totaled result;
a judgment means for judging whether attribute information containing image management information generated for the image, the user attributes, and the totaled result satisfies a predetermined reference; and
a transmission means for transmitting at least a part of the attribute information to an image display apparatus, which displays the image, according to a result of the judgment by the judgment means.

15. An image management program for causing a computer to function as:

a totaling means for totaling user attributes for each user of an image and outputting a totaled result;
a judgment means for judging whether the totaled result satisfies a predetermined reference; and
a processing means for processing at least one of the image file and the user attributes according to a result of the judgment by the judgment means.

16. An image management program according to claim 15,
wherein the processing by the processing means comprises processing of the image file.

17. An image management program according to claim 15,
wherein the processing by the processing means comprises changing of the user attributes.

18. An image management program for causing a computer to function as:

a totaling means for totaling user attributes for each user of an image and outputting a totaled result;
a judgment means for judging whether attribute information containing image management information generated for the image, the user attributes, and the totaled result satisfies a predetermined reference; and
a transmission means for transmitting the image file to an image display apparatus, which displays the image, according to a result of the judgment by the judgment means.

19. An image management program for causing a computer to function as:

an attribute information input means for inputting one of display attribute information and non-display attribute information for each image file to be transmitted to an image server that records an image file;
a judgment means for judging whether the image file is to be transmitted to the image server based on the inputted attribute information; and
a transmission means for transmitting the image file to the image server according to a result of the judgment by the judgment means.

**20.** An image management program for causing a computer to function as:

an attribute information input means for inputting one of display attribute information and non-display attribute information for an image in advance;
a judgment means for judging whether an image file, which is transmitted from an image server that records an image file of the image, is an image file of an image for which the display attribute information has been set, or an image file of an image for which the non-display attribute information has been set; and
a processing means for processing the image according to a result of the judgment by the judgment means.

**21.** An image management program for causing a computer to function as:

a totaling means for totaling user attributes for each user of an image and outputting a totaled result;
a judgment means for judging whether attribute information containing image management information generated for the image, the user attributes, and the totaled result satisfies a predetermined reference; and
a transmission means for transmitting at least a part of the attribute information to an image display apparatus, which displays the image, according to a result of the judgment by the judgment means.

**22.** A computer-readable recording medium recording an image management program for causing a computer to function as:

a totaling means for totaling user attributes for each user of an image and outputting a totaled result;
a judgment means for judging whether the totaled result satisfies a predetermined reference; and
a processing means for processing at least one of an image file of the image and the user attributes according to a result of the judgment by the judgment means.

**23.** A computer-readable recording medium recording an image management program according to claim 22, wherein the processing by the processing means comprises processing of the image file.

**24.** A computer-readable recording medium recording an image management program according to claim 22, wherein the processing by the processing means comprises changing of the user attributes.

**25.** A computer-readable recording medium recording an image management program for causing a computer to function as:

a totaling means for totaling user attributes for each user of an image and outputting a totaled result;
a judgment means for judging whether attribute information containing image management information generated for the image, the user attributes, and the totaled result satisfies a predetermined reference; and
a transmission means for transmitting the image file to an image display apparatus, which displays the image, according to a result of the judgment by the judgment means.

**26.** A computer-readable recording medium recording an image management program for causing a computer to function as:

an attribute information input means for inputting one of display attribute information and non-display attribute information for each image file to be transmitted to an image server that records an image file;
a judgment means for judging whether the image file is to be transmitted to the image server, which records the image file, based on the inputted attribute information; and
a transmission means for transmitting the image file to the image server according to a result of the judgment by the judgment means.

**27.** A computer-readable recording medium recording an image management program for causing a computer to function as:

an attribute information input means for inputting one of display attribute information and non-display attribute information for an image in advance;
a judgment means for judging whether an image file of the image transmitted from an image server that records the image file is an image file of an image for which the display attribute information has been set, or an image file of an image for which the non-display attribute information has been set; and
a processing means for processing the image according to a result of the judgment by the judgment means.

28. A computer-readable recording medium recording an image management program for causing a computer to function as:

a totaling means for totaling user attributes for each user of an image and outputting a totaled result;
a judgment means for judging whether attribute information containing image management information generated for the image, the user attributes, and the totaled result satisfies a predetermined reference; and
a transmission means for transmitting at least a part of the attribute information to an image display apparatus, which displays the image, according to a result of the judgment by the judgment means.

## FIG. 1

# FIG. 2

104

```
┌─────────────────────────────────────────────────────┐
│                                                       │
│       201                        202                  │
│    ┌─────────┐              ┌─────────────┐           │
│    │   CPU   │──────────────│   MEMORY    │           │
│    └─────────┘              └─────────────┘           │
│         │                                             │
│         │              203                            │
│         │       ┌──────────────────────────┐         │
│         ├───────│       HARD DISK           │         │
│         │       └──────────────────────────┘         │
│         │                                             │
│         │              204                            │
│         │       ┌──────────────────────────┐         │
│         ├───────│     DISPLAY DEVICE        │         │
│         │       └──────────────────────────┘         │
│         │                                             │
│         │              205                            │
│         │       ┌──────────────────────────┐         │
│         ├───────│       KEYBOARD            │         │
│         │       └──────────────────────────┘         │
│         │                                             │
│         │              206                            │
│         │       ┌──────────────────────────┐         │
│         ├───────│     POINTING DEVICE       │         │
│         │       └──────────────────────────┘         │
│         │                                             │
│         │              207                            │
│         │       ┌──────────────────────────┐         │
│         └───────│ COMMUNICATION INTERFACE   │         │
│                 └──────────────────────────┘         │
│                                                       │
└─────────────────────────────────────────────────────┘
```

## FIG. 3

```
                    ┌─────────────────┐
                    │     SHARED      │
                    │   INFORMATIO    │────── 301
                    └─────────────────┘
                             │
        ┌────────────────────┼────────────────────────┐
   302 ─┤                     │ 303                     │── 304
        │                     │                         │
┌───────────────┐   ┌───────────────┐         ┌───────────────┐
│    IMAGE 1    │   │    IMAGE 2    │         │    IMAGE 3    │
│  MANAGEMENT   │   │  MANAGEMENT   │         │  MANAGEMENT   │
│  INFORMATION  │   │  INFORMATION  │         │  INFORMATION  │
└───────────────┘   └───────────────┘         └───────────────┘
        │
  ┌─────┼───────────────┬──────────────────┐
  │     │      306       │        307       │
305 ─   │                │                  │
┌───────────────┐  ┌───────────────┐  ┌───────────────┐
│   IMAGE FILE  │  │ USER ATTRIBUTE │  │ TOTALED RESULT │
└───────────────┘  └───────────────┘  └───────────────┘
                          │                   │
                          │    308            │     310
                   ┌──────────────┐    ┌──────────────┐
                   │ INFORMATION  │    │ NON-DISPLAY  │
                   │ ABOUT PERSON │    │ RATIO        │
                   │ WHOSE NAME IS A │ └──────────────┘
                   └──────────────┘
                          │    309            │     311
                   ┌──────────────┐    ┌──────────────┐
                   │ INFORMATION  │    │ SEARCH HIT   │
                   │ ABOUT PERSON │    │ RATIO        │
                   │ WHOSE NAME IS B │ └──────────────┘
                   └──────────────┘
```

EP 1 632 857 A1

## FIG. 4

| | | CONTENTS | EXAMPLE |
|---|---|---|---|
| 401 | | SHARING NAME | NAKAGAWA FAMILY |
| | SHARED INFORMATION | TABLE OR RECORDING DESTINATION OF ID LIST OF SHARING PERSONS | XX012345 |
| 402 | | TABLE OR RECORDING DESTINATION OF IMAGE MANAGEMENT INFORMATION LIST | |
| | IMAGE MANAGEMENT INFORMATION | IMAGE DATA OR RECORDING DESTINATION (INCLUDING PLACE ON NETWORK) | c:¥data¥○○××○¥fuji1.×○× |
| | | IMAGE NAME | MT. FUJI IN SUMMER |
| | | FILE CREATION/UPDATE/FINAL REFERENCE DATE AND TIME | 2002/8/12 |
| | | SEARCH KEYWORD | MOUNTAIN, JAPAN, MT. FUJI, VOLCANO |
| | | TABLE OR RECORDING DESTINATION OF USER ATTRIBUTE | NON-DISPLAY, SEARCH, FAVORITE |
| | | TABLE OR RECORDING DESTINATION OF TOTALED RESULT | |
| 403 | USER ATTRIBUTE | NON-DISPLAY ATTRIBUTE | NON-DISPLAY |
| | | MANUAL DISPLAY TIME | 46529 SECONDS |
| | | NUMBER OF TIMES OF "FAVORITE" REGISTRATION | 24 TIMES |
| | | NUMBER OF TIMES OF SEARCH HIT | 1024 TIMES |
| 404 | | NUMBER OF TIMES OF COPYING | 12 TIMES |
| | TOTALED RESULT | STATISTICAL NUMBER ANALYZED WITH USER ATTRIBUTE | NON-DISPLAY NUMBER OR NON-DISPLAY RATIO |
| | | | MANUAL DISPLAY TIME OR MANUAL DISPLAY TIME RATIO |
| | | | NUMBER OF "FAVORITE" REGISTRATION OR "FAVORITE" REGISTRATION RATIO |
| | | | SEARCH HIT NUMBER OR SEARCH HIT RATIO |
| | | | COPY NUMBER OR COPY RATIO |

## FIG. 5

**IMAGE DISPLAY TERMINAL**

- S501 — SELECT REQUEST FROM MENU
- S502 — DECIDE REQUEST CONTENTS
- S503 — TRANSMIT REQUEST CONTENTS
- S504 — END

**IMAGE SERVER**

- S505 — RECEIVE REQUEST CONTENTS
- S506 — SELECT CORRESPONDING PROCESSING CONTETNS
- S507 — EXECUTE PROCESSING
- S508 — END

EP 1 632 857 A1

## FIG. 6

```
┌─────────────────────────────────────────────┐
│           OCCURRENCE  OF  EVENT               │────── S601
└─────────────────────────────────────────────┘
                      │
                      ▼
┌─────────────────────────────────────────────┐
│  SELECT  CORRESPONDING  PROCESSING  CONTENTS  │────── S602
└─────────────────────────────────────────────┘
                      │
                      ▼
┌─────────────────────────────────────────────┐
│            EXECUTE  PROCESSING                │────── S603
└─────────────────────────────────────────────┘
                      │
                      ▼
┌─────────────────────────────────────────────┐
│                  END                          │────── S604
└─────────────────────────────────────────────┘
```

EP 1 632 857 A1

*FIG. 7*

IMAGE DISPLAY TERMINAL

701 — IMAGE FILE SHARING SYNCHRONIZATION PROCESSING

IMAGE SERVER

IMAGE FILE SHARING SYNCHRONIZATION PROCESSING — 702

*FIG. 8*

| IMAGE DISPLAY TERMINAL | IMAGE SERVER |
|---|---|

TRANSMIT LIST — S801

S802 — RECEIVE LIST

S803 — ISSUE IMAGE FILE TRANSMISSION/RECEPTION REQUEST TO IMAGE SERVER

S804 — TRANSMIT/RECEIVE REQUESTED IMAGE FILE

RECORDING — S805

RECORDING — S806

*FIG. 9*

## FIG. 10

1001

ATTRIBUTE
INFORMATION
INPUT SECTION

1002

ATTRIBUTE
INFORMATION
RECORDING SECTION

# FIG. 11

ATTRIBUTE INFORMATION INPUT — S1101

ATTRIBUTE INFORMATION RECORDING — S1102

## FIG. 12

TOTALING PROCESSING START — S1201

↓

DECIDE USER ATTRIBUTE TO BE TOTALED — S1202

↓

INITIALIZE IMAGE COUNTER — S1203

↓

ACQUIRE USER ATTRIBUTE FOR IMAGE — S1204

↓

TOTALING OF USER ATTRIBUTE FOR IMAGE START — S1205

↓

S1206 IMAGE END? —NO→ IMAGE COUNTER + 1 — S1207

↓YES

STATISTICALLY PROCESS TOTALED RESULT — S1208

↓

RECORD TOTALED RESULT — S1209

↓

TOTALING PROCESSING END — S1210

EP 1 632 857 A1

## FIG. 13

```
┌─────────────────────────────┐
│ TOTALING OF USER ATTRIBUTE  │──── S1301
│ FOR IMAGE START             │
└─────────────────────────────┘
              │
              ▼
┌─────────────────────────────┐
│ INITIALIZE INDIVIDUAL       │──── S1302
│ COUNTER                     │
└─────────────────────────────┘
              │
              ▼
┌─────────────────────────────┐
│ ACQUIRE USER ATTRIBUTE      │──── S1303          ──── S1306
└─────────────────────────────┘         ┌──────────────────────────┐
              │                          │ INDIVIDUAL COUNTER + 1    │
              ▼                          └──────────────────────────┘
┌─────────────────────────────┐                      ▲
│ TOTALING PROCESSING         │──── S1304             │
└─────────────────────────────┘                      │
  S1305       │                                       │
              ▼                                       │
           ╱EVERY╲           NO                       │
          ⟨ USER END? ⟩──────────────────────────────┘
           ╲     ╱
              │ YES
              ▼
┌─────────────────────────────┐
│ TOTALING END                │──── S1307
└─────────────────────────────┘
```

41

*FIG. 14*

1401

1402

| USER ATTRIBUTE INPUT SECTION | TRANSMISSION SECTION |

# FIG. 15

1501

RECEPTION SECTION

1502

RECORDING SECTION

1503

TOTALING SECTION

## FIG. 16

```
┌─────────────────────────┐        ┌─────────────────────────┐
│ IMAGE DISPLAY TERMINAL   │        │      IMAGE SERVER        │
└─────────────────────────┘        └─────────────────────────┘
            │                                   │
            ▼                                   │
   ┌──────────────────────┐                     │
   │ INPUT USER ATTRIBUTE │──── S1601           │
   └──────────────────────┘                     │
            │        S1602                       │
            ▼                                     │
   ┌──────────────────────┐                      │
   │    TRANSMISSION      │                      │
   └──────────────────────┘                      │
            ●──────────────────────────────────▶│    S1603
            │                           ┌────────────────────────┐
            │                           │ RECEIVE USER ATTRIBUTE │
            │                           └────────────────────────┘
            │                                     │
            │                                     ▼
            │                              ┌─────────────┐
            │                              │  RECORDING  │──── S1604
            │                              └─────────────┘
            │                                     │
            │                                     ▼
            │                              ┌─────────────┐
            │                              │  TOTALING   │──── S1605
            │                              └─────────────┘
            │                                     │
            │                                     ▼
            │                              ┌─────────────┐
            │                              │  RECORDING  │──── S1606
            │                              └─────────────┘
            │                                     │
            ▼                                     ▼
           ( )                                   ( )
```

FIG. 17

EP 1 632 857 A1

FIG. 18

EP 1 632 857 A1

## FIG. 19

```
              1901                    1902                    1903
┌──────────────────┐    ┌──────────────────┐    ┌──────────────────┐
│                  │    │                  │    │ REFERENCE        │
│ RECEPTION SECTION│    │ JUDGMENT SECTION │    │ DECIDING SECTION │
│                  │    │                  │    │                  │
└──────────────────┘    └──────────────────┘    └──────────────────┘

              1904                    1905                    1906
┌──────────────────┐    ┌──────────────────┐    ┌──────────────────┐
│ RECORDING        │    │ PROCESSING       │    │ REFERENCE        │
│ SECTION          │    │ SECTION          │    │ SETTING SECTION  │
│                  │    │                  │    │                  │
└──────────────────┘    └──────────────────┘    └──────────────────┘
```

EP 1 632 857 A1

## FIG. 20

```
                                    ┌─S2001
          ┌──────────────────────────┐
          │    EXECUTE PROCESSING     │
          └──────────────────────────┘
                        │          ┌─S2002
                        ▼
          ┌──────────────────────────┐
          │ DECIDE TOTALED RESULT TO  │
          │ BE USED                   │
          └──────────────────────────┘
                        │          ┌─S2003
                        ▼
          ┌──────────────────────────┐
          │     DECIDE REFERENCE      │
          └──────────────────────────┘
                        │          ┌─S2004
                        ▼
          ┌──────────────────────────┐
          │  INITIALIZE IMAGE COUNTER │
          └──────────────────────────┘
   S2005              │
          ┌──────────────────────────┐
          │  ACQUIRE IMAGE TOTALED    │
          │  RESULT                   │
          └──────────────────────────┘
   S2006              │
    NO      ◇ REFERENCE       ◇
   ◄────────  SATISFIED?
                      │ YES        ┌─S2007
                      ▼
          ┌──────────────────────────┐          ┌─S2009
          │    EXECUTE PROCESSING     │   ┌──────────────────────┐
          └──────────────────────────┘   │   IMAGE COUNTER + 1   │
                      │                   └──────────────────────┘
                      ▼      ┌─S2008
              ◇ IMAGE END? ◇ ──NO──►
                      │ YES    ┌─S2010
                      ▼
          ┌──────────────────────────┐
          │      PROCESSING END       │
          └──────────────────────────┘
```

FIG. 21

EP 1 632 857 A1

## FIG. 22

```
          2201                    2202                    2203
 ┌──────────────────┐   ┌──────────────────┐   ┌──────────────────┐
 │  RECEPTION       │   │  TRANSMISSION    │   │  DISPLAY SECTION │
 │  SECTION         │   │  SECTION         │   │                  │
 └──────────────────┘   └──────────────────┘   └──────────────────┘

          2204                    2205
 ┌──────────────────┐   ┌──────────────────┐
 │  REFERENCE       │   │  REQUESTING      │
 │  INPUT SECTION   │   │  SECTION         │
 └──────────────────┘   └──────────────────┘
```

EP 1 632 857 A1

FIG. 23

2301

RECEPTION SECTION

2302

JUDGMENT SECTION

2303

TRANSMISSION
SECTION

2304

RECORDING SECTION

2305

PROCESSING SECTION

EP 1 632 857 A1

## FIG. 24

| IMAGE DISPLAY TERMINAL | IMAGE SERVER |
|---|---|

INPUT REFERENCE ~S2401

S2402
TRANSMISSION TO IMAGE SERVER

RECEPTION ~S2403

S2404
MAKE JUDGMENT AS TO WHETHER REFERENCE IS SATISFIED FOR EACH IMAGE

S2405
SELECT IMAGE NOT SATISFYING REFERENCE FROM LIST

S2406
TRANSMIT LIST AND SELECTION INFORMATION

S2407
RECEIVE LIST AND SELECTION INFORMATION

S2408
REQUEST DOWNLOAD BASED ON RECEIVED LIST AND SELECTION INFORMATION

S2409
TRANSMIT REQUESTED IMAGE FILE

S2410
RECEIVE IMAGE FILE

RECORDING ~S2411

*FIG. 25*

IMAGE INPUT TERMINAL

2501 — DISPLAY — 2504
2502 — 2505
NON-DISPLAY
2503 — DISPLAY — 2506
2507
2508
2501
2503

2501
2509
2503

IMAGE DISPLAY TERMINAL

IMAGE DISPLAY TERMINAL

2501
2510
2503

EP 1 632 857 A1

## FIG. 26

```
                    2601                          2602
    ┌──────────────────────┐        ┌──────────────────────┐
    │                      │        │  ATTRIBUTE           │
    │  DISPLAY SECTION     │        │  INFORMATION         │
    │                      │        │  INPUT SECTION       │
    └──────────────────────┘        └──────────────────────┘

                    2603                          2604
    ┌──────────────────────┐        ┌──────────────────────┐
    │                      │        │  TRANSMISSION        │
    │  JUDGMENT SECTION    │        │  SECTION             │
    │                      │        │                      │
    └──────────────────────┘        └──────────────────────┘

                    2605
    ┌──────────────────────┐
    │                      │
    │ RECORDING SECTION    │
    │                      │
    └──────────────────────┘
```

## FIG. 27

SELECTION OF IMAGE — S2701

DISPLAY IMAGE — S2702

INPUT ATTRIBUTE INFORMATION — S2703

RECORDING — S2704

ATTRIBUTE INPUT END? — S2705 — NO

YES

INITIALIZE IMAGE COUNTER — S2706

DISPLAY IMAGE? — S2707 — NO

YES

TRANSMIT IMAGE FILE — S2708

EVERY IMAGE? — S2709 — NO

IMAGE COUNTER + 1 — S2710

YES

*FIG. 28*

EP 1 632 857 A1

## FIG. 29

| DISPLAY SECTION | 2901 | RECEPTION SECTION | 2902 | ATTRIBUTE INFORMATION INPUT SECTION | 2903 |
|---|---|---|---|---|---|

| JUDGMENT SECTION | 2904 | RECORDING SECTION | 2905 |
|---|---|---|---|

EP 1 632 857 A1

# FIG. 30

```
┌──────────────────────────┐              ┌──────────────────────────┐
│  IMAGE DISPLAY TERMINAL   │              │      IMAGE SERVER         │
└──────────────────────────┘              └──────────────────────────┘
             │                                          │
             │ ┌─ S3001                                 │
             ▼                                          │
┌──────────────────────────┐                            │
│    INPUT ATTRIBUTE        │                            │
│    INFORMATION            │                            │
└──────────────────────────┘                            │
             │ ┌─ S3002                                 │
             ▼                                          │
┌──────────────────────────┐                            │
│   RECORD ATTRIBUTE        │                            │
│   INFORMATION             │                            │
└──────────────────────────┘                            │
             │                                          ▼
             │                             ┌──────────────────────────┐
             │                             │   TRANSMIT LIST           │──── S3003
   S3004 ─┐  │                             └──────────────────────────┘
          ▼  ▼◄─────────────────────────────────────────┘
┌──────────────────────────┐
│    RECEIVE LIST           │
└──────────────────────────┘
   S3005 ─┐  │
          ▼  ▼
┌──────────────────────────┐
│ ISSUE IMAGE FILE DOWNLOAD │
│ REQUEST TO IMAGE SERVER   │──────────────────────────┐
└──────────────────────────┘                            ▼
             │                             ┌──────────────────────────┐  ┌─ S3006
             │                             │  DOWNLOAD REQUESTED       │
             │                             │  IMAGE FILE               │
             │                             └──────────────────────────┘
             ▼◄─────────────────────────────────────────┘
┌──────────────────────────┐
│    RECORDING              │──── S3007
└──────────────────────────┘
             │ ┌─ S3008
             ▼
         ╱────────────╲              NO
        ╱ DISPLAY IMAGE? ╲──────────────┐
         ╲────────────╱                 │
             │ YES                      │
             ▼                          │
┌──────────────────────────┐           │
│    DISPLAY                │──── S3009 │
└──────────────────────────┘           │
             ▼◄─────────────────────────┘
            ( )                              ( )
```

# FIG. 31

3101 — NEW IMAGE TAKEN IN PAST HALF-YEAR

3102 — SEARCH WITH "FLOWER" & "INSECT"

3103 — POPULAR IMAGE

IMAGE DISPLAY TERMINAL A — 3104

IMAGE DISPLAY TERMINAL B — 3105

IMAGE DISPLAY TERMINAL C — 3106

REFERENCE SET BY EACH IMAGE DISPLAY TERMINAL — 3114  3108

ATTRIBUTE INFORMATION — 3107  3109  3111

ATTRIBUTE INFORMATION

3110  3112

SELECTION PROCESSING — 3113

3115

3116

EP 1 632 857 A1

*FIG. 32*

RECEPTION SECTION    3201

TRANSMISSION SECTION    3202

REFERENCE INPUT SECTION    3203

RECORDING SECTION    3204

EP 1 632 857 A1

*FIG. 33*

3301

RECEPTION SECTION

3302

JUDGMENT SECTION

3303

TRANSMISSION SECTION

3304

RECORDING SECTION

EP 1 632 857 A1

## FIG. 34

```
┌─────────────────────────┐          ┌─────────────────────────┐
│ IMAGE DISPLAY TERMINAL   │          │     IMAGE SERVER        │
└─────────────────────────┘          └─────────────────────────┘
            │                                      │
            ▼                                      │
   ┌──────────────────┐                            │
   │ INPUT REFERENCE   │──S3401                     │
   └──────────────────┘                            │
            │      S3402                            │
            ▼                                       │
   ┌──────────────────┐                            │
   │  TRANSMISSION     │                            │
   └──────────────────┘                            │
            ●────────────────────────────────────▶ │
            │                              ┌──────────────────┐
            │                              │   RECEPTION       │──S3403
            │                              └──────────────────┘
            │                                      │      S3404
            │                                      ▼
            │                         ┌────────────────────────────┐
            │                         │ MAKE JUDGMENT AS TO         │
            │                         │ WHETHER REFERENCE IS        │
            │                         │ SATISFIED FOR EACH IMAGE    │
            │                         └────────────────────────────┘
            │                                      │      S3405
            │                                      ▼
            │                         ┌────────────────────────────┐
            │                         │ TRANSMIT ATTRIBUTE          │
            │                         │ INFORMATION AS TO IMAGE     │
            │                         │ SATISFYING REFERENCE        │
            │                         └────────────────────────────┘
            ◀──────────────────────────────────────●
            ▼
   ┌──────────────────┐
   │ RECEIVE ATTRIBUTE │──S3406
   │ INFORMATION       │
   └──────────────────┘
            │
            ▼
   ┌──────────────────┐
   │   RECORDING       │──S3407
   └──────────────────┘
            │                                      │
            ▼                                      ▼
           ( )                                    ( )
```

## INTERNATIONAL SEARCH REPORT

| International application No. |
|---|
| PCT/JP03/07365 |

**A. CLASSIFICATION OF SUBJECT MATTER**
Int.Cl⁷ G06F12/00, G06F13/00, G06F17/30

According to International Patent Classification (IPC) or to both national classification and IPC

**B. FIELDS SEARCHED**

Minimum documentation searched (classification system followed by classification symbols)
Int.Cl⁷ G06F12/00, G06F13/00, G06F17/30

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br><br><br>A | JP 11-085579 A  (Canon Inc.),<br>30 March, 1999 (30.03.99),<br>Full text; all drawings<br>(Family: none) | 1-3,5,6,<br>8-10,12,13,<br>15-17,19,20,<br>22-24,26,27<br>4,7,11,14,<br>18,21,25,28 |
| Y | JP 2001-175515 A  (Hitachi, Ltd.),<br>29 June, 2001 (29.06.01),<br>Full text; all drawings<br>(Family: none) | 1-3,8-10,<br>15-17,22-24 |
| Y | "Hyojun MS-DOS Hand Book", 1st edition, Ascii<br>Corp., 10 July, 1984 (10.07.84), pages 336 to 342 | 5,6,12,13,19,<br>20,26,27 |

☐ Further documents are listed in the continuation of Box C.     ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>09 September, 2003 (09.09.03) | Date of mailing of the international search report<br>24 September, 2003 (24.09.03) |
|---|---|
| Name and mailing address of the ISA/<br>Japanese Patent Office | Authorized officer |
| Facsimile No. | Telephone No. |

Form PCT/ISA/210 (second sheet) (July 1998)